# EUROPEAN PATENT APPLICATION

(11) **EP 4 708 998 A1**
(43) Date of publication of application: **11.03.2026**
(21) Application number: 24802808.6
(22) Date of filing: 28.04.2024
(51) Int. Cl.: H04W 72/0446, H04L 5/00

(54) **METHOD AND APPARATUS USED IN NODE FOR WIRELESS COMMUNICATION**

(30) Priority: 05.05.2023 CN 202310500380
(71) Applicant: Apogee Networks, LLC, Dallas, TX 75201 (US)
(72) Inventor: WU, Lu, Shanghai 201206 (CN); SONG, Shulin, Shanghai 201206 (CN); ZHANG, Xiaobo, Shanghai 201206 (CN)
(74) Representative: Gunzelmann, Rainer
(86) International application number: PCT/CN2024/090258
(87) International publication number: WO 2024/230523

(57) **Abstract**

Disclosed in the present application are a method and apparatus used in a node for wireless communication. The method comprises: a first node receiving a first information block, wherein the first information block is used for determining a reference time-domain resource set; and receiving first signaling, and sending a first signal, wherein the first signaling comprises a first domain, the first domain in the first signaling indicates a first SRI, and the first domain comprises at least one bit; the first SRI indicates a first SRS resource, and some or all of the antenna ports for sending the first signal are the same as antenna ports for the first SRS resource; and the first SRI is associated with at least one transmission of the first SRS resource before the first signaling, and the at least one transmission depends on the reference time domain resource set.

## Description

### Technical Field

The present application relates to a transmission method and apparatus in a wireless communication system, in particular to a transmission solution and apparatus in a wireless communication system.

### Background Art

Network Energy Saving (NES) is of great significance for environmental sustainability, reducing an impact (greenhouse gas emissions) on environment, and saving operating costs. With the popularization of 5G (the 5th Generation Partnership Project) in industries and geographic regions, very high data rates are required to handle more advanced services and applications (such as XR), resulting in increasingly dense networks, use of more antennas, greater bandwidths, and more frequency bands. In order to keep the impact of the 5G on the environment within a controllable range, new solutions need to be studied to improve network energy saving. Therefore, the 3GPP (the 3rd Generation Partnership Project) RAN#94 meeting passed a study item (SI) of the "Study on network energy savings" to study technology enhancements in the time domain, frequency domain, spatial domain, power domain and other aspects.

In an existing NR (New Radio) system, spectrum resources are statically divided into an FDD (Frequency Division Duplexing) spectrum and a TDD (Time Division Duplexing) spectrum. Moreover, for the TDD spectrum, both base stations and user equipment operate in a half-duplex mode. This half-duplex mode avoids self-interference and can alleviate an impact of cross link interference, but it also brings about a decrease in resource utilization and an increase in latency. To address these problems, supporting a flexible duplex mode on the TDD spectrum or the FDD spectrum becomes a possible solution. At the 3GPP RAN (Radio Access Network) 1#103e meeting, study work on duplex technology was agreed, in which SubBand nonoverlapping Full Duplex (SBFD) was proposed, that is, supporting base station devices to send and receive simultaneously on two subbands. Communication in this mode will be subject to severe interference, comprising self-interference and cross link interference.

### Summary of the Invention

In an existing system, UE determines an antenna port for sending one signal according to SRS (Sounding reference signal) resources, and how to determine the SRS resources for sending of one signal is a key problem.

In response to the above problem, the present application discloses a solution. It should be noted that, in the description of the present application, only energy-saving and flexible duplex modes are used as two typical application scenarios or examples; and the present application can also be applied to non-energy-saving application scenarios (including, but not limited to, capacity enhancement systems, short-range communication systems, unlicensed frequency-domain communication, IoT (Internet of Things), URLLC (Ultra Reliable Low Latency Communication) networks, Internet of Vehicles, etc.), and application scenarios in half-duplex modes (including, but not limited to, TDD, FDD, etc.). Further, using a unified design solution for different scenarios (including, but not limited to, energy-saving scenarios, non-energy-saving scenarios, SBFD, other flexible duplex modes or full-duplex modes, variable link direction modes, traditional duplex modes, half-duplex modes, etc.) can also help to reduce hardware complexity and costs. In the absence of conflicts, embodiments and features in the embodiments in any node of the present application may be applied to any other node, and vice versa. In the absence of conflicts, the embodiments and features in the embodiments of the present application may be arbitrarily combined with each other.

In particular, for explanations of terminologies, nouns, functions, and variables in the present application (unless otherwise specified), reference may be made to definitions in the 3GPP standard protocols TS36 series, TS38 series, and TS37 series. If necessary, reference may be made to 3GPP standards TS38.211, TS38.212, TS38.213, TS38.214, TS38.215, TS38.321, TS38.331, TS38.305, TS38.304, and TS37.355 to assist in understanding the present application.

The present application discloses a method used in a first node for wireless communication, characterized by comprising:
receiving a first information block, wherein the first information block is used for determining a reference time-domain resource set; receiving first signaling; and
sending a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, problems to be solved by the present application comprise: how to determine an SRS resource for sending of one signal is a key problem.

As one embodiment, problems to be solved by the present application comprise: how to determine at least one transmission of an SRS resource for sending of one signal is a key problem.

As one embodiment, benefits of using the above method are that by determining an appropriate SRS resource, sending of one signal is flexibly adjusted.

As one embodiment, the benefits of using the above method are that by determining at least one transmission of an appropriate SRS resource, sending of one signal is flexibly adjusted.

As one embodiment, the benefits of the present application comprise: improving transmission reliability.

As one embodiment, the benefits of the present application comprise: increasing transmission capacity.

As one embodiment, the benefits of the present application comprise: improving transmission efficiency.

As one embodiment, the benefits of the present application comprise: increasing system flexibility.

As one embodiment, the benefits of the present application comprise: saving network energy.

According to one aspect of the present application, it is characterized in that "the at least one transmission depends on the reference time-domain resource set" comprises: precoding information of the first SRS resource in the at least one transmission depends on whether the at least one transmission overlaps with the reference time-domain resource set in a time domain.

As one embodiment, the above method improves estimation accuracy of channels and/or interference by selecting appropriate precoding information, thereby improving transmission reliability and enhancing system performance.

According to one aspect of the present application, it is characterized in that the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission.

As one embodiment, the above method supports an uplink transmission on DL symbols, improves uplink coverage, and increases uplink transmission capacity.

As one embodiment, the above method supports a flexible duplex mode, improves uplink coverage, and increases uplink transmission capacity.

As one embodiment, the above method supports SBFD technology, improves uplink coverage, and increases uplink transmission capacity.

According to one aspect of the present application, it is characterized in that in the reference time-domain resource set, sending of one or more transmissions of the first SRS resource is abandoned.

As one embodiment, the above method reduces channel or signal conflicts in the reference time-domain resource set.

As one embodiment, the above method supports a network energy saving mode, and saves network energy.

According to one aspect of the present application, it is characterized in that in the reference time-domain resource set, sending of signals on some of antenna ports in one or more transmissions of the first SRS resource is abandoned.

As one embodiment, the above method reduces channel or signal conflicts in the reference time-domain resource set.

As one embodiment, the above method supports a network energy saving mode, and saves network energy.

According to one aspect of the present application, it is characterized in that the at least one transmission comprises a plurality of transmissions of the first SRS resource before the first signaling.

As one embodiment, the above method improves estimation accuracy of channels and/or interference, thereby improving transmission reliability and enhancing system performance.

According to one aspect of the present application, it is characterized in that the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

As one embodiment, the above method supports a flexible duplex mode, improves uplink coverage, and increases uplink transmission capacity.

As one embodiment, the above method supports a network energy saving mode, saves network energy, ensures transmission reliability, and enhances system performance.

According to one aspect of the present application, it is characterized in that either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

As one embodiment, the above method selects at least one transmission of an appropriate SRS resource according to a time-domain resource where the first signal is located, thereby improving transmission reliability and system flexibility.

According to one aspect of the present application, it is characterized in that when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

According to one aspect of the present application, it is characterized by comprising:
a first receiver receiving a second information block,
wherein the second information block is used for determining a reference frequency-domain resource set; and a UL transmission in one or more symbols configured by higher-layer parameters as DL in the reference time-domain resource set belongs to the reference frequency-domain resource set in a frequency domain.

As one embodiment, the above method achieves simultaneous receiving and sending on a base station side by limiting frequency-domain resources that may be occupied by an uplink transmission on a DL symbol.

As one embodiment, the above method supports a flexible duplex mode.

As one embodiment, the above method supports SBFD technology.

The present application discloses a method used in a second node for wireless communication, characterized by comprising:
sending a first information block, wherein the first information block is used for determining a reference time-domain resource set; sending first signaling; and
receiving a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

According to one aspect of the present application, it is characterized in that "the at least one transmission depends on the reference time-domain resource set" comprises: precoding information of the first SRS resource in the at least one transmission depends on whether the at least one transmission overlaps with the reference time-domain resource set in a time domain.

According to one aspect of the present application, it is characterized in that the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission.

According to one aspect of the present application, it is characterized in that in the reference time-domain resource set, sending of one or more transmissions of the first SRS resource is abandoned.

According to one aspect of the present application, it is characterized in that in the reference time-domain resource set, sending of signals on some of antenna ports in one or more transmissions of the first SRS resource is abandoned.

According to one aspect of the present application, it is characterized in that the at least one transmission comprises a plurality of transmissions of the first SRS resource before the first signaling.

According to one aspect of the present application, it is characterized in that the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

According to one aspect of the present application, it is characterized in that either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

According to one aspect of the present application, it is characterized in that when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

According to one aspect of the present application, it is characterized by comprising:
a first receiver sending a second information block,
wherein the second information block is used for determining a reference frequency-domain resource set; and a UL transmission in one or more symbols configured by higher-layer parameters as DL in the reference time-domain resource set belongs to the reference frequency-domain resource set in a frequency domain.

The present application discloses a first node device for wireless communication, characterized by comprising:
a first receiver receiving a first information block, wherein the first information block is used for determining a reference time-domain resource set; and receiving first signaling; and
a first transmitter sending a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

The present application discloses a second node device for wireless communication, characterized by comprising:
a second transmitter sending a first information block, wherein the first information block is used for determining a reference time-domain resource set; and sending first signaling; and
a second receiver receiving a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, compared with a traditional solution, the present application has the following advantages:
- by determining an appropriate SRS resource, flexibly adjusting sending of uplink signals;
- increasing transmission capacity;
- improving transmission efficiency;
- increasing system flexibility; and
- saving network energy.

### Brief Description of the Drawings

Other features, purposes and advantages of the present application will become more apparent from reading the detailed description of the non-limiting embodiments made with reference to the following drawings:
FIG. 1 shows a flowchart of a first information block, first signaling, and a first signal according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless transmission according to one embodiment of the present application;
FIG. 6 shows a schematic diagram of at least one transmission depending on a reference time-domain resource set according to one embodiment of the present application;
FIGs. 7A-7C respectively show schematic diagrams of a reference time-domain resource set according to one embodiment of the present application;
FIG. 8 shows a schematic diagram of at least one transmission according to one embodiment of the present application;
FIGs. 9A-9B respectively show schematic diagrams of EPRE of at least one transmission according to another embodiment of the present application;
FIG. 10 shows a schematic diagram of a relationship among a first signal, a reference time-domain resource set, and a first condition according to one embodiment of the present application;
FIG. 11 shows a schematic diagram of a relationship among at least one transmission, a reference time-domain resource set, and a second condition according to one embodiment of the present application;
FIG. 12 shows a schematic diagram of a second information block and a reference frequency-domain resource set according to one embodiment of the present application;
FIG. 13 shows a structural block diagram of a processing apparatus used in a first node device according to one embodiment of the present application; and
FIG. 14 shows a structural block diagram of a processing apparatus used in a second node device according to one embodiment of the present application.

### Detailed Description of Embodiments

The technical solutions of the present application will be further described in detail below in conjunction with the drawings. It should be noted that, in the absence of conflicts, embodiments and features in the embodiments in the present application may be arbitrarily combined with each other.

### Embodiment 1

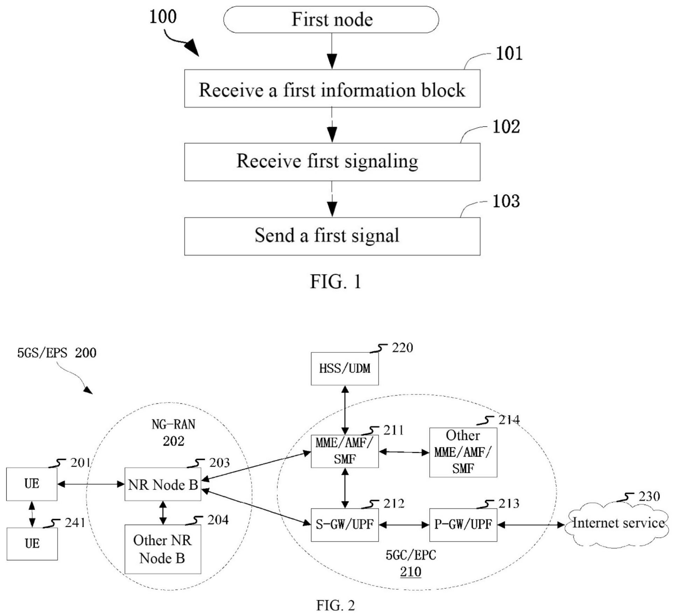

Embodiment 1 illustrates a flowchart of a first information block, first signaling, and a first signal according to one embodiment of the present application, as shown in FIG. 1. In 100 shown in FIG. 1, each block represents one step.

In Embodiment 1, a first node in the present application receives the first information block in step 101, wherein the first information block is used for determining a reference time-domain resource set; receives the first signaling in step 102; and sends the first signal in step 103, wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, the first information block is carried by higher layer signaling.

As one embodiment, the first information block is carried by RRC (Radio Resource Control) signaling.

As one embodiment, the first information block comprises all or some of fields in one RRC IE (Information Element).

As one embodiment, the first information block comprises all or some of fields in each RRC IE among a plurality of RRC IEs.

As one embodiment, the first information block comprises all or some of fields in a TDD-UL-DL-ConfigCommon IE.

As one embodiment, the first information block comprises all or some of fields in a TDD-UL-DL-ConfigDedicated IE.

As one embodiment, the first information block comprises all or some of fields in a ServingCellConfig IE.

As one embodiment, the first information block comprises all or some of fields in a ServingCellConfigCommonSIB IE.

As one embodiment, the first information block comprises information in all or some of fields in a ServingCellConfigCommon IE.

As one embodiment, the first information block is carried by at least one RRC IE.

As one embodiment, a name of one IE carrying the first information block comprises TDD-UL-DL-Config.

As one embodiment, the name of one IE carrying the first information block comprises ServingCellConfig.

As one embodiment, the first information block is carried by a MAC CE (Medium Access Control Layer Control Element).

As one embodiment, the first information block comprises a MAC CE.

As one embodiment, the first information block is transmitted on a downlink physical layer data channel (i.e., a downlink channel that can be used for bearing physical layer data).

As one embodiment, the first information block is transmitted on a PDSCH.

As one embodiment, the first information block is carried by DCI (Downlink control information).

As one embodiment, the first information block comprises DCI.

As one embodiment, the first information block comprises one or more fields in one piece of DCI.

As one embodiment, the first information block is carried by a DCI format 2_0.

As one embodiment, the first information block comprises a DCI format 2_0.

As one embodiment, the first information block is jointly carried by RRC signaling and a MAC CE.

As one embodiment, the first information block is jointly carried by higher layer signaling and DCI.

As one embodiment, the first information block is used for indicating the reference time-domain resource set.

As one embodiment, the first information block indicates periods and time offsets of the reference time-domain resource set.

As one embodiment, the first information block indicates time-domain resources comprised in the reference time-domain resource set within one period.

As one embodiment, the first information block indicates symbols comprised in the reference time-domain resource set within one period.

As one embodiment, the first information block indicates slots comprised in the reference time-domain resource set within one period.

As one embodiment, the first information block indicates the reference time-domain resource set.

As one embodiment, the first information block explicitly indicates the reference time-domain resource set.

As one embodiment, the first information block implicitly indicates the reference time-domain resource set.

As one embodiment, the first information block indicates at least one symbol in the reference time-domain resource set.

As one embodiment, the first information block indicates a position of at least one symbol in the reference time-domain resource set in a first time unit.

As one embodiment, the first information block indicates a position of each symbol in the reference time-domain resource set in a first time unit.

As one embodiment, the first information block indicates an index of at least one symbol in the reference time-domain resource set in the first time unit.

As one embodiment, the first information block indicates an index of each symbol in the reference time-domain resource set in the first time unit.

As one embodiment, the reference time-domain resource set is after reception of the first information block, and a time interval between the reference time-domain resource set and the reception of the first information block is not less than timeDurationForQCL.

As one embodiment, the first information block is received in a second time unit, the reference time-domain resource set is after the second time unit, and a time interval between the reference time-domain resource set and the second time unit is not less than timeDurationForQCL.

As one embodiment, the first information block is transmitted on a PDCCH, the reference time-domain resource set is after a PDCCH bearing the first information block, and the time interval between the reference time-domain resource set and the second time unit is not less than timeDurationForQCL.

As one embodiment, the reference time-domain resource set is after reception of the first information block, and the time interval between the reference time-domain resource set and the reception of the first information block is not less than beamSwitchTiming.

As one embodiment, the first information block is received in the second time unit, the reference time-domain resource set is after the second time unit, and the time interval between the reference time-domain resource set and the second time unit is not less than beamSwitchTiming.

As one embodiment, the first information block is transmitted on a PDCCH, the reference time-domain resource set is after the PDCCH bearing the first information block, and the time interval between the reference time-domain resource set and the second time unit is not less than beamSwitchTiming.

As one embodiment, for the specific definition of timeDurationForQCL, refer to Chapter 5.1.5 of 3GPP TS38.213.

As one embodiment, for the specific definition of beamSwitchTiming, refer to Chapter 5.2.1.5.1 of 3GPP TS38.213.

As one embodiment, the second time unit comprises at least one slot.

As one embodiment, the second time unit comprises a plurality of slots.

As one embodiment, the second time unit is one slot.

As one embodiment, the second time unit comprises at least one subframe.

As one embodiment, the second time unit is one subframe.

As one embodiment, the second time unit comprises a plurality of symbols.

As one embodiment, the second time unit comprises at least one DL symbol.

As one embodiment, the second time unit comprises a DL or Flexible symbol.

As one embodiment, the second time unit is not later than the first time unit.

As one embodiment, the second time unit is earlier than the first time unit.

As one embodiment, the first information block is used for determining at least one index.

As one embodiment, the at least one index comprises one or more of an RS resource index, an RS resource set index, a TCI state index, an antenna port index, an index of an antenna port group, an index of an antenna port set, an RS port index, a CORESET index, a CORESET pool index, a cell index, or a PCI (Physical Cell Identifier).

As one embodiment, the at least one index comprises one index.

As one embodiment, the at least one index comprises a plurality of indexes.

As one embodiment, the at least one index comprises one or more indexes.

As one embodiment, any index among the at least one index is one non-negative integer.

As one embodiment, the at least one index comprises one index, and the any index among the at least one index is the at least one index.

As one embodiment, the at least one index comprises a plurality of indexes, and the any index among the at least one index is any index among the plurality of indexes.

As one embodiment, any index among the at least one index indicates one RS (Reference Signal) resource.

As one embodiment, one index among the at least one index indicates one RS resource.

As one embodiment, any index among the at least one index is used for identifying one RS resource.

As one embodiment, one index among the at least one index is used for identifying one RS resource.

As one embodiment, any index among the at least one index indicates one group of RS resources.

As one embodiment, one index among the at least one index indicates one group of RS resources.

As one embodiment, any index among the at least one index is used for identifying one group of RS resources.

As one embodiment, one index among the at least one index is used for identifying one group of RS resources.

As one embodiment, one index among the at least one index is one of NZP-CSI-RS-ResourceId, SSB-Index, or SRS-ResourceId.

As one embodiment, any index among the at least one index is one of NZP-CSI-RS-ResourceId, SSB-Index, or SRS-ResourceId.

As one embodiment, any index among the at least one index indicates one TCI (Transmission Configuration Indicator) state.

As one embodiment, one index among the at least one index indicates one TCI state.

As one embodiment, any index among the at least one index is used for identifying one TCI state.

As one embodiment, one index among the at least one index is used for identifying one TCI state.

As one embodiment, any index among the at least one index indicates one group of TCI states.

As one embodiment, one index among the at least one index indicates one group of TCI states.

As one embodiment, one index among the at least one index is one of TCI-StateId or TCI-UL-State-Id.

As one embodiment, any index among the at least one index is one of TCI-StateId or TCI-UL-State-Id.

As one embodiment, any index among the at least one index indicates one antenna port.

As one embodiment, one index among the at least one index indicates one antenna port.

As one embodiment, any index among the at least one index indicates one group of antenna ports.

As one embodiment, one index among the at least one index indicates one group of antenna ports.

As one embodiment, the antenna port comprises an RS port.

As one embodiment, the antenna port comprises at least one of a CSI-RS port or an SRS port.

As one embodiment, any index among the at least one index indicates one TRP (Transmitter Receiver Point).

As one embodiment, one index among the at least one index indicates one TRP.

As one embodiment, any index among the at least one index indicates one antenna panel.

As one embodiment, one index among the at least one index indicates one antenna panel.

As one embodiment, one index among the at least one index indicates one cell.

As one embodiment, any index among the at least one index indicates one cell.

As one embodiment, one index among the at least one index is used for identifying one cell or TRP.

As one embodiment, any index among the at least one index is used for identifying one cell or TRP.

As one embodiment, one index among the at least one index indicates one CORESET.

As one embodiment, one index among the at least one index is used for identifying one CORESET.

As one embodiment, any index among the at least one index indicates one CORESET.

As one embodiment, any index among the at least one index is used for identifying one CORESET.

As one embodiment, one index among the at least one index indicates one CORESET pool.

As one embodiment, one index among the at least one index is used for identifying one CORESET pool.

As one embodiment, any index among the at least one index indicates one CORESET pool.

As one embodiment, any index among the at least one index is used for identifying one CORESET pool.

As one embodiment, one index among the at least one index indicates one PCI.

As one embodiment, one index among the at least one index is used for identifying one PCI.

As one embodiment, any index among the at least one index indicates one PCI.

As one embodiment, any index among the at least one index is used for identifying one PCI.

As one embodiment, one index among the at least one index indicates one serving cell.

As one embodiment, one index among the at least one index indicates one PCI different from a PCI of a serving cell.

As one embodiment, one index among the at least one index indicates one cell or TRP corresponding to a PCI different from a PCI of a serving cell.

As one embodiment, one index among the at least one index is one cell index.

As one embodiment, any index among the at least one index is one cell index.

As one embodiment, the cell index comprises one or more of PhysCellId, SCellIndex, or ServCellIndex.

As one embodiment, the cell index comprises one or more of PhysCellId, SCellIndex, ServCellIndex, or AdditionalPCIIndex.

As one embodiment, the first information block is used for determining at least one index; and some or all of antenna ports in the first SRS resource are associated with the at least one index.

As one sub-embodiment of the above embodiment, the at least one index is used for indicating a deactivated RS resource.

As one sub-embodiment of the above embodiment, the at least one index is used for indicating a deactivated RS resource.

As one sub-embodiment of the above embodiment, the at least one index is used for indicating a deactivated TCI state.

As one sub-embodiment of the above embodiment, the at least one index is used for indicating a deactivated antenna port.

As one sub-embodiment of the above embodiment, the at least one index is used for indicating a deactivated CORESET.

As one sub-embodiment of the above embodiment, the at least one index is used for indicating a deactivated CORESET pool.

As one sub-embodiment of the above embodiment, the at least one index is used for indicating a deactivated TRP or antenna panel.

As one sub-embodiment of the above embodiment, the at least one index is used for indicating a deactivated cell.

As one sub-embodiment of the above embodiment, the at least one index is used for indicating one or more of a deactivated RS resource, a deactivated TCI state, a deactivated antenna port, a deactivated CORESET, a deactivated CORESET pool, a deactivated TRP, a deactivated antenna panel, or a deactivated cell.

As one sub-embodiment of the above embodiment, the at least one index is used for indicating a zero-power antenna port.

As one sub-embodiment of the above embodiment, the at least one index is used for indicating a non-zero-power antenna port.

As one sub-embodiment of the above embodiment, the meaning of activated comprises: non-zero-power.

As one sub-embodiment of the above embodiment, the meaning of deactivated comprises: muted.

As one sub-embodiment of the above embodiment, the meaning of deactivated comprises: inactive.

As one sub-embodiment of the above embodiment, the meaning of deactivated comprises: zero-power.

As one embodiment, the first information block is used for determining at least one index; and some or all of antenna ports in the first SRS resource are not associated with the at least one index.

As one sub-embodiment of the above embodiment, the at least one index is used for indicating an activated RS resource.

As one sub-embodiment of the above embodiment, the at least one index is used for indicating an activated RS resource.

As one sub-embodiment of the above embodiment, the at least one index is used for indicating an activated TCI state.

As one sub-embodiment of the above embodiment, the at least one index is used for indicating an activated antenna port.

As one sub-embodiment of the above embodiment, the at least one index is used for indicating an activated CORESET.

As one sub-embodiment of the above embodiment, the at least one index is used for indicating an activated CORESET pool.

As one sub-embodiment of the above embodiment, the at least one index is used for indicating an activated TRP or antenna panel.

As one sub-embodiment of the above embodiment, the at least one index is used for indicating an activated cell.

As one sub-embodiment of the above embodiment, the at least one index is used for indicating one or more of an activated RS resource, an activated TCI state, an activated antenna port, an activated CORESET, an activated CORESET pool, an activated TRP, an activated antenna panel, or an activated cell.

As one embodiment, the meaning of "some or all of antenna ports in the first SRS resource are associated with the at least one index" comprises: the at least one index is used for indicating or identifying the first SRS resource.

As one embodiment, the meaning of "some or all of antenna ports in the first SRS resource are associated with the at least one index" comprises: the at least one index is used for indicating or identifying RS resources that comprise the first SRS resource.

As one embodiment, the meaning of "some or all of antenna ports in the first SRS resource are associated with the at least one index" comprises: the at least one index is used for indicating or identifying some or all of antenna ports in the first SRS resource.

As one embodiment, the meaning of "some or all of antenna ports in the first SRS resource are associated with the at least one index" comprises: some or all of antenna ports in the first SRS resource and one RS resource indicated or identified by the at least one index apply a same spatial filter.

As one embodiment, the meaning of "some or all of antenna ports in the first SRS resource are associated with the at least one index" comprises: some or all of antenna ports in the first SRS resource and one RS resource indicated or identified by the at least one index have a same spatial relationship.

As one embodiment, the meaning of "some or all of antenna ports in the first SRS resource are associated with the at least one index" comprises: a Tx spatial filter applied by some or all of antenna ports in the first SRS resource is the same as an Rx spatial filter of one DL RS resource indicated or identified by the at least one index.

As one embodiment, the meaning of "some or all of antenna ports in the first SRS resource are associated with the at least one index" comprises: some or all of antenna ports in the first SRS resource and one RS resource indicated by "one TCI state indicated or identified by the at least one index" apply a same spatial filter.

As one embodiment, the meaning of "some or all of antenna ports in the first SRS resource are associated with the at least one index" comprises: some or all of antenna ports in the first SRS resource and one RS resource indicated by "one TCI state indicated or identified by the at least one index" have a same spatial relationship.

As one embodiment, the meaning of "some or all of antenna ports in the first SRS resource are associated with the at least one index" comprises: a Tx spatial filter applied by some or all of antenna ports in the first SRS resource is the same as an Rx spatial filter of one DL RS resource indicated by "one TCI state indicated or identified by the at least one index".

As one embodiment, the meaning of "some or all of antenna ports in the first SRS resource are associated with the at least one index" comprises: some or all of antenna ports in the first SRS resource and one RS resource indicated by "a TCI state of one CORESET indicated or identified by the at least one index" apply a same spatial filter.

As one embodiment, the meaning of "some or all of antenna ports in the first SRS resource are associated with the at least one index" comprises: some or all of antenna ports in the first SRS resource and one RS resource indicated by "a TCI state of one CORESET indicated or identified by the at least one index" have a same spatial relationship.

As one embodiment, the meaning of "some or all of antenna ports in the first SRS resource are associated with the at least one index" comprises: a Tx spatial filter applied by some or all of antenna ports in the first SRS resource is the same as an Rx spatial filter of one DL RS resource indicated by "a TCI state of one CORESET indicated or identified by the at least one index".

As one embodiment, the meaning of "some or all of antenna ports in the first SRS resource are associated with the at least one index" comprises: some or all of antenna ports in the first SRS resource and one RS resource indicated by "a TCI state of one or one group of antenna ports indicated or identified by the at least one index" apply a same spatial filter.

As one embodiment, the meaning of "some or all of antenna ports in the first SRS resource are associated with the at least one index" comprises: some or all of antenna ports in the first SRS resource and one RS resource indicated by "a TCI state of one or one group of antenna ports indicated or identified by the at least one index" have a same spatial relationship.

As one embodiment, the meaning of "some or all of antenna ports in the first SRS resource are associated with the at least one index" comprises: a Tx spatial filter applied by some or all of antenna ports in the first SRS resource is the same as an Rx spatial filter of one DL RS resource indicated by "a TCI state of one or one group of antenna ports indicated or identified by the at least one index".

As one embodiment, the meaning of "some or all of antenna ports in the first SRS resource are associated with the at least one index" comprises: a TRP for receiving signals on some or all of antenna ports in the first SRS resource is the same as one TRP indicated or identified by the at least one index.

As one embodiment, the meaning of "some or all of antenna ports in the first SRS resource are associated with the at least one index" comprises: an antenna panel for receiving signals on some or all of antenna ports in the first SRS resource is the same as one antenna panel indicated or identified by the at least one index.

As one embodiment, the meaning of "some or all of antenna ports in the first SRS resource are associated with the at least one index" comprises: one cell indicated or identified by the at least one index is the same as a cell where some or all of antenna ports of the first SRS resource are located.

As one embodiment, the meaning of "some or all of antenna ports in the first SRS resource are associated with the at least one index" comprises: some or all of antenna ports in the first SRS resource belong to one or one group of antenna ports indicated or identified by the at least one index.

As one embodiment, the meaning of "some or all of antenna ports in the first SRS resource are associated with the at least one index" comprises: some or all of antenna ports in the first SRS resource and one or one group of antenna ports indicated or identified by the at least one index apply a same spatial filter.

As one embodiment, the meaning of "some or all of antenna ports in the first SRS resource are associated with the at least one index" comprises: some or all of antenna ports in the first SRS resource and one or one group of antenna ports indicated or identified by the at least one index have a same spatial relationship.

As one embodiment, the meaning of "some or all of antenna ports in the first SRS resource are associated with the at least one index" comprises: a Tx spatial filter of some or all of antenna ports in the first SRS resource is the same as an Rx spatial filter of one or one group of antenna ports indicated or identified by the at least one index.

As one embodiment, the meaning of "some or all of antenna ports in the first SRS resource are not associated with the at least one index" comprises: the at least one index is not used for indicating or identifying the first SRS resource.

As one embodiment, the meaning of "some or all of antenna ports in the first SRS resource are not associated with the at least one index" comprises: the at least one index is used for indicating or identifying RS resources that do not comprise the first SRS resource.

As one embodiment, the meaning of "some or all of antenna ports in the first SRS resource are not associated with the at least one index" comprises: the at least one index is not used for indicating or identifying some or all of antenna ports in the first SRS resource.

As one embodiment, the meaning of "some or all of antenna ports in the first SRS resource are not associated with the at least one index" comprises: some or all of antenna ports in the first SRS resource and one RS resource indicated or identified by the at least one index apply different spatial filters.

As one embodiment, the meaning of "some or all of antenna ports in the first SRS resource are not associated with the at least one index" comprises: some or all of antenna ports in the first SRS resource and one RS resource indicated or identified by the at least one index have different spatial relationships.

As one embodiment, the meaning of "some or all of antenna ports in the first SRS resource are not associated with the at least one index" comprises: a Tx spatial filter applied by some or all of antenna ports in the first SRS resource is different from an Rx spatial filter of one DL RS resource indicated or identified by the at least one index.

As one embodiment, the meaning of "some or all of antenna ports in the first SRS resource are not associated with the at least one index" comprises: some or all of antenna ports in the first SRS resource and one RS resource indicated by "one TCI state indicated or identified by the at least one index" apply different spatial filters.

As one embodiment, the meaning of "some or all of antenna ports in the first SRS resource are not associated with the at least one index" comprises: some or all of antenna ports in the first SRS resource and one RS resource indicated by "one TCI state indicated or identified by the at least one index" have different spatial relationships.

As one embodiment, the meaning of "some or all of antenna ports in the first SRS resource are not associated with the at least one index" comprises: a Tx spatial filter applied by some or all of antenna ports in the first SRS resource is different from an Rx spatial filter of one DL RS resource indicated by "one TCI state indicated or identified by the at least one index".

As one embodiment, the meaning of "some or all of antenna ports in the first SRS resource are not associated with the at least one index" comprises: some or all of antenna ports in the first SRS resource and one RS resource indicated by "a TCI state of one CORESET indicated or identified by the at least one index" apply different spatial filters.

As one embodiment, the meaning of "some or all of antenna ports in the first SRS resource are not associated with the at least one index" comprises: some or all of antenna ports in the first SRS resource and one RS resource indicated by "a TCI state of one CORESET indicated or identified by the at least one index" have different spatial relationships.

As one embodiment, the meaning of "some or all of antenna ports in the first SRS resource are not associated with the at least one index" comprises: a Tx spatial filter applied by some or all of antenna ports in the first SRS resource is different from an Rx spatial filter of one DL RS resource indicated by "a TCI state of one CORESET indicated or identified by the at least one index".

As one embodiment, the meaning of "some or all of antenna ports in the first SRS resource are not associated with the at least one index" comprises: some or all of antenna ports in the first SRS resource and one RS resource indicated by "a TCI state of one or one group of antenna ports indicated or identified by the at least one index" apply different spatial filters.

As one embodiment, the meaning of "some or all of antenna ports in the first SRS resource are not associated with the at least one index" comprises: some or all of antenna ports in the first SRS resource and one RS resource indicated by "a TCI state of one or one group of antenna ports indicated or identified by the at least one index" have different spatial relationships.

As one embodiment, the meaning of "some or all of antenna ports in the first SRS resource are not associated with the at least one index" comprises: a Tx spatial filter applied by some or all of antenna ports in the first SRS resource is different from an Rx spatial filter of one DL RS resource indicated by "a TCI state of one or one group of antenna ports indicated or identified by the at least one index".

As one embodiment, the meaning of "some or all of antenna ports in the first SRS resource are not associated with the at least one index" comprises: a TRP where some or all of antenna ports in the first SRS resource are located is different from one TRP indicated or identified by the at least one index.

As one embodiment, the meaning of "some or all of antenna ports in the first SRS resource are not associated with the at least one index" comprises: an antenna panel where some or all of antenna ports in the first SRS resource are located is different from one antenna panel indicated or identified by the at least one index.

As one embodiment, the meaning of "some or all of antenna ports in the first SRS resource are not associated with the at least one index" comprises: one cell indicated or identified by the at least one index is different from a cell where some or all of antenna ports of the first SRS resource are located.

As one embodiment, the meaning of "some or all of antenna ports in the first SRS resource are not associated with the at least one index" comprises: some or all of antenna ports in the first SRS resource do not belong to one or one group of antenna ports indicated or identified by the at least one index.

As one embodiment, the meaning of "some or all of antenna ports in the first SRS resource are not associated with the at least one index" comprises: some or all of antenna ports in the first SRS resource and one or one group of antenna ports indicated or identified by the at least one index apply different spatial filters.

As one embodiment, the meaning of "some or all of antenna ports in the first SRS resource are not associated with the at least one index" comprises: some or all of antenna ports in the first SRS resource and one or one group of antenna ports indicated or identified by the at least one index have different spatial relationships.

As one embodiment, the meaning of "some or all of antenna ports in the first SRS resource are not associated with the at least one index" comprises: a Tx spatial filter of some or all of antenna ports in the first SRS resource is different from an Rx spatial filter of one or one group of antenna ports indicated or identified by the at least one index.

As one embodiment, the first time unit comprises at least one slot.

As one embodiment, the first time unit comprises a plurality of slots.

As one embodiment, the first time unit is one slot.

As one embodiment, the first time unit comprises at least one subframe.

As one embodiment, the first time unit is one subframe.

As one embodiment, the first time unit comprises a plurality of symbols.

As one embodiment, the reference time-domain resource set comprises some or all of symbols in at least one slot.

As one embodiment, the reference time-domain resource set comprises some or all of symbols in at least one subframe.

As one embodiment, the reference time-domain resource set comprises at least one symbol.

As one embodiment, the reference time-domain resource set comprises a plurality of symbols.

As one embodiment, the symbol is a single carrier symbol.

As one embodiment, the symbol is a multi carrier symbol.

As one embodiment, the multi carrier symbol is an OFDM (Orthogonal Frequency Division Multiplexing) symbol.

As one embodiment, the symbol is obtained after an output of a transform precoding undergoes OFDM symbol generation.

As one embodiment, the multi carrier symbol is an SC-FDMA (Single Carrier-Frequency Division Multiple Access) symbol.

As one embodiment, the multi carrier symbol is a DFT-S-OFDM (Discrete Fourier Transform Spread OFDM) symbol.

As one embodiment, the multi carrier symbol is an FBMC (Filter Bank Multi Carrier) symbol.

As one embodiment, the multi carrier symbol comprises a CP (Cyclic Prefix).

As one embodiment, the reference time-domain resource set comprises symbols used for both an uplink transmission and a downlink transmission.

As one embodiment, any symbol in the reference time-domain resource set may be simultaneously used for an uplink transmission and a downlink transmission.

As one embodiment, any symbol in the reference time-domain resource set is simultaneously used for an uplink transmission and a downlink transmission.

As one embodiment, at least one symbol in the reference time-domain resource set is simultaneously used for an uplink transmission and a downlink transmission.

As one embodiment, the reference time-domain resource set does not comprise symbols for a transmission of a first-type downlink signal, and the first-type downlink signal comprises one or more of an SS (Synchronisation Signal)/PBCH (physical broadcast channel) Block, a CORESET (COntrol REsource SET) with an index of 0, or an SIB (System Information Block).

As one embodiment, one or more RBs in one or more DL symbols of the reference time-domain resource set are used for an uplink transmission.

As one embodiment, each symbol in the reference time-domain resource set is configured by higher-layer parameters as DL.

As one embodiment, each symbol in the reference time-domain resource set is configured by higher-layer parameters as DL or Flexible.

As one embodiment, at least one symbol in the reference time-domain resource set is configured by higher-layer parameters as DL, and at least one symbol in the reference time-domain resource set is configured by the higher-layer parameters as Flexible.

As one embodiment, the reference time-domain resource set is configured to one serving cell.

As one embodiment, the reference time-domain resource set is configured to a serving cell where a first RS resource set is located.

As one embodiment, the reference time-domain resource set is configured to at least one BWP (BandWidth Part).

As one embodiment, the reference time-domain resource set is configured to one BWP.

As one embodiment, the reference time-domain resource set is configured to one DL BWP.

As one embodiment, the higher-layer parameters are carried by RRC (Radio Resource Control) signaling.

As one embodiment, the higher-layer parameters comprise all or some of fields in one RRC IE (Information Element).

As one embodiment, the higher-layer parameters comprise all or some of fields in each RRC IE among a plurality of RRC IEs.

As one embodiment, the higher-layer parameters comprise all or some of fields in a TDD-UL-DL-ConfigCommon IE.

As one embodiment, the higher-layer parameters comprise all or some of fields in a TDD-UL-DL-ConfigDedicated IE.

As one embodiment, the higher-layer parameters comprise all or some of fields in a ServingCellConfig IE.

As one embodiment, the higher-layer parameters comprise all or some of fields in a ServingCellConfigCommonSIB IE.

As one embodiment, the higher-layer parameters comprise information in all or some of fields in a ServingCellConfigCommon IE.

As one embodiment, the higher-layer parameters are carried by at least one RRC IE.

As one embodiment, a name of one IE carrying the higher-layer parameters comprises TDD-UL-DL-Config.

As one embodiment, the name of one IE carrying the higher-layer parameters comprises ServingCellConfig.

As one embodiment, the first signaling is physical layer signaling.

As one embodiment, the first signaling is DCI (Downlink Control Information) signaling.

As one embodiment, the first signaling is DCI signaling used for scheduling an uplink transmission.

As one embodiment, the first signaling is DCI signaling used for scheduling a PUSCH (Physical Uplink Shared CHannel).

As one embodiment, the first signaling is transmitted on a PDCCH (Physical Downlink Control CHannel).

As one embodiment, the first signaling is used for scheduling the first signal.

As one embodiment, the first signaling is used for triggering the first signal.

As one embodiment, the first signaling indicates scheduling information of the first signal.

As one embodiment, the scheduling information of the first signal comprises at least one of the followings: an occupied time-domain resource, an occupied frequency-domain resource, an MCS (Modulation and Coding Scheme), configuration information of a DMRS (DeModulation Reference Signal), an HARQ (Hybrid Automatic Repeat reQuest) process number, an RV (Redundancy version), an NDI (New Data Indicator), the number of layer(s), an antenna port, a TCI state, one or more SRS (Sounding Reference Signal) resource indicators, and a PMI (Precoding Matrix Indicator).

As one embodiment, the first signal comprises a baseband signal.

As one embodiment, the first signal comprises a wireless signal.

As one embodiment, the first signal comprises a radio frequency signal.

As one embodiment, the first signal is transmitted on an uplink physical channel.

As one embodiment, the first signal is a PUSCH.

As one embodiment, the first signal is transmitted on a PUSCH.

As one embodiment, the first signal is an uplink signal.

As one embodiment, the first signal is transmitted on an uplink physical channel.

As one embodiment, the first signal carries a positive integer number of transport blocks (TBs).

As one embodiment, the first signal carries one transport block.

As one embodiment, the first signal carries at least one code block group (CBG).

As one embodiment, the first signal is a codebook based PUSCH transmission.

As one embodiment, the first signal is a codebook based PUSCH transmission, the first domain of the first signaling indicates only one SRI, and the first SRI is the only one SRI.

As one embodiment, the first signal is a non-codebook based PUSCH transmission.

As one embodiment, the first signal is a non-codebook based PUSCH transmission, the first domain of the first signaling indicates at least one SRI, and the first SRI belongs to the at least one SRI.

As one embodiment, the first signal is a non-codebook based PUSCH transmission, the first domain of the first signaling indicates a plurality of SRIs, and the first SRI is one SRI among the plurality of SRIs.

As one embodiment, the first signal is a non-codebook based PUSCH transmission, the first domain of the first signaling indicates a plurality of SRIs, and the first SRI is any SRI among the plurality of SRIs.

As one embodiment, the first signal is a non-codebook based PUSCH transmission, the first domain of the first signaling indicates at least one SRI, the first SRI belongs to the at least one SRI, and the number of SRIs comprised in the at least one SRI is equal to the number of layers of the first signal.

As one embodiment, the first signaling is used for scheduling a PUSCH, and the first signal comprises some of layers of the PUSCH scheduled by the first signaling.

As one embodiment, the first signaling is used for scheduling a PUSCH, and the first signal comprises all layers of the PUSCH scheduled by the first signaling.

As one embodiment, the first signaling is used for scheduling a PUSCH, and the first signal comprises some or all of layers of the PUSCH scheduled by the first signaling.

As one embodiment, the first domain comprises a plurality of bits.

As one embodiment, the first domain comprises one bit.

As one embodiment, the first domain is an SRS resource indicator field.

As one embodiment, the first domain is a Second SRS resource indicator field.

As one embodiment, a name of the first domain comprises an SRS.

As one embodiment, the name of the first domain comprises an SRS resource indicator.

As one embodiment, for the specific definition of an SRS resource indicator field, refer to Chapter 7.3.1 of 3GPP TS38.212.

As one embodiment, for the specific definition of a Second SRS resource indicator field, refer to Chapter 7.3.1 of 3GPP TS38.212.

As one embodiment, the first SRS resource is a periodic SRS resource.

As one embodiment, the first SRS resource is a semi-persistent SRS resource.

As one embodiment, the first SRS resource is a periodic SRS resource, and one transmission of the first SRS resource is a transmission within one period.

As one embodiment, the first SRS resource is a semi-persistent SRS resource, and one transmission of the first SRS resource is a transmission within one period.

As one embodiment, "the first domain in the first signaling indicates a first SRI (SRS resource indicator)" refers to: the first domain in the first signaling explicitly indicates the first SRI.

As one embodiment, "the first domain in the first signaling indicates a first SRI" refers to: the first domain in the first signaling implicitly indicates the first SRI.

As one embodiment, "the first domain in the first signaling indicates a first SRI" refers to: the first domain comprises N candidate values, and N SRIs are respectively mapped to the N candidate values; and the first SRI is one SRI among the N SRIs that is mapped to a value of the first domain in the first signaling.

As one embodiment, "the first domain in the first signaling indicates a first SRI" refers to: the first domain comprises N candidate values, N groups of SRIs are respectively mapped to the N candidate values, and any group of SRIs in the N groups of SRIs comprises one or more SRIs; and the first SRI belongs to one group of SRIs in the N groups of SRIs that is mapped to a value of the first domain in the first signaling.

As one embodiment, the first SRS resource is one SRS resource in the first SRS resource set, and any SRS resource in the first SRS resource set is mapped to at least one candidate value in the first domain.

Typically, antenna ports for the first SRS resource comprise one or more antenna ports.

As one embodiment, some of antenna ports for sending the first signal are the same as an antenna port(s) for the first SRS resource.

As one embodiment, all antenna ports for sending the first signal are the same as antenna ports for the first SRS resource.

As one embodiment, the meaning of "some or all of antenna ports for sending the first signal are the same as antenna ports for the first SRS resource" comprises: some or all of antenna ports for sending the first signal are the same as all antenna ports for the first SRS resource.

As one embodiment, the meaning of "some or all of antenna ports for sending the first signal are the same as antenna ports for the first SRS resource" comprises: an index(es) of some or all of antenna ports for sending the first signal is (are) the same as an index(es) of antenna ports for the first SRS resource.

As one embodiment, the meaning of "some or all of antenna ports for sending the first signal are the same as antenna ports for the first SRS resource" comprises: some or all of antenna ports for sending the first signal are the same as an antenna port(s) for the at least one transmission of the first SRS resource.

As one embodiment, the meaning of "some or all of antenna ports for sending the first signal are the same as antenna ports for the first SRS resource" comprises: an index(es) of some or all of antenna ports for sending the first signal is (are) the same as an index(es) of an antenna port(s) for the at least one transmission of the first SRS resource.

As one embodiment, the meaning of "some or all of antenna ports for sending the first signal are the same as antenna ports for the first SRS resource" comprises: the some of antenna ports for sending the first signal are the same as antenna ports for the at least one transmission of the first SRS resource.

As one embodiment, the meaning of "some or all of antenna ports for sending the first signal are the same as antenna ports for the first SRS resource" comprises: indexes of the some of antenna ports for sending the first signal are the same as indexes of antenna ports for the at least one transmission of the first SRS resource.

As one embodiment, the meaning of "some or all of antenna ports for sending the first signal are the same as antenna ports for the first SRS resource" comprises: all antenna ports for sending the first signal are the same as antenna ports for the at least one transmission of the first SRS resource.

As one embodiment, the meaning of "some or all of antenna ports for sending the first signal are the same as antenna ports for the first SRS resource" comprises: indexes of all antenna ports for sending the first signal are the same as indexes of antenna ports for the at least one transmission of the first SRS resource.

As one embodiment, the meaning of "some or all of antenna ports for sending the first signal are the same as antenna ports for the first SRS resource" comprises: a transmission precoder(s) of the first signal is (are) determined based on at least the first SRI.

As one embodiment, the meaning of "a transmission precoder(s) of the first signal is (are) determined based on at least the first SRI" comprises: the first signal is a codebook based PUSCH transmission, the first signaling also indicates a TPMI (Transmission PMI (Precoding matrix indicator)) and a transmission rank of the first signaling, and the transmission precoder(s) of the first signal is (are) determined based on the first SRI, the TPMI, and the transmission rank.

As one embodiment, the meaning of "a transmission precoder(s) of the first signal is (are) determined based on at least the first SRI" comprises: the first signal is a non-codebook based PUSCH transmission, the first domain of the first signaling indicates at least one SRI, the first SRI belongs to the at least one SRI, and a transmission precoder(s) of the first signal is (are) determined based on the at least one SRI.

As one embodiment, the meaning of "a transmission precoder(s) of the first signal is (are) determined based on at least the first SRI" comprises: a transmission precoder(s) of the first signal is (are) obtained according to a transmission precoder of the at least one transmission of the first SRS resource.

As one embodiment, the meaning of "a transmission precoder(s) of the first signal is (are) determined based on at least the first SRI" comprises: a transmission precoder of the at least one transmission of the first SRS resource is the same as one transmission precoder of the first signal.

As one embodiment, the meaning of "a transmission precoder(s) of the first signal is (are) determined based on at least the first SRI" comprises: one transmission precoder of the first signal is equal to a product of a transmission precoder of the at least one transmission of the first SRS resource and one factor; and the one factor is one real number, or the one factor is one complex number.

As one embodiment, the meaning of "a transmission precoder(s) of the first signal is (are) determined based on at least the first SRI" comprises: a transmission precoder of the first signal is obtained according to a transmission precoder of at least the first SRS resource.

As one embodiment, the meaning of "a transmission precoder(s) of the first signal is (are) determined based on at least the first SRI" comprises: a transmission precoder of the first SRS resource is the same as one transmission precoder of the first signal.

As one embodiment, the meaning of "a transmission precoder(s) of the first signal is (are) determined based on at least the first SRI" comprises: one transmission precoder of the first signal is equal to a product of a transmission precoder of the first SRS resource and one factor; and the one factor is one real number, or the one factor is one complex number.

As one embodiment, the meaning of "some or all of antenna ports for sending the first signal are the same as antenna ports for the first SRS resource" comprises: some or all of antenna ports for the first signal and antenna ports for the first SRS resource use a same spatial filter.

As one embodiment, the meaning of "some or all of antenna ports for sending the first signal are the same as antenna ports for the first SRS resource" comprises: some or all of antenna ports for the first signal and antenna ports for at least one transmission of the first SRS resource use a same spatial filter.

As one embodiment, the meaning of "the first SRI is associated with at least one transmission of the first SRS resource before the first signaling" comprises: the first SRI is associated with only the at least one transmission of the first SRS resource.

As one embodiment, the meaning of "the first SRI is associated with at least one transmission of the first SRS resource before the first signaling" comprises: the first SRI is not associated with any transmission other than the at least one transmission of the first SRS resource.

As one embodiment, the meaning of "the first SRI is associated with at least one transmission of the first SRS resource before the first signaling" comprises: the first SRI indicates the at least one transmission of the first SRS resource before the first signaling.

As one embodiment, the meaning of "the first SRI is associated with at least one transmission of the first SRS resource before the first signaling" comprises: information indicated by the first SRI is the at least one transmission of the first SRS resource before the first signaling.

As one embodiment, the meaning of "the first SRI is associated with at least one transmission of the first SRS resource" comprises: the first SRI indicates only the at least one transmission of the first SRS resource before the first signaling.

As one embodiment, the meaning of "the first SRI is associated with at least one transmission of the first SRS resource" comprises: information indicated by the first SRI is only the at least one transmission of the first SRS resource.

As one embodiment, the meaning of "the first SRI is associated with at least one transmission of the first SRS resource before the first signaling" comprises: some or all of antenna ports for sending the first signal are the same as antenna ports for the at least one transmission of the first SRS resource before the first signaling.

As one embodiment, the meaning of "the first SRI is associated with at least one transmission of the first SRS resource before the first signaling" comprises: some or all of antenna ports for sending the first signal and antenna ports for the at least one transmission of the first SRS resource before the first signaling use a same spatial filter.

As one embodiment, the meaning of "the first SRI is associated with at least one transmission of the first SRS resource before the first signaling" comprises: a transmission precoder(s) of the first signal is (are) determined based on at least the first SRI, and "based on at least the first SRI" refers to based on at least one transmission of the first SRS resource before the first signaling that is associated with at least the first SRI.

As one embodiment, the first SRI is associated with at least one transmission of the first SRS resource before the first signaling.

As one embodiment, the at least one transmission is before the first signaling.

As one embodiment, the at least one transmission comprises one or more transmissions of the first SRS resource before the first signaling.

As one embodiment, the at least one transmission comprises a plurality of transmissions of the first SRS resource before the first signaling.

As one embodiment, the at least one transmission comprises two transmissions of the first SRS resource before the first signaling.

As one embodiment, the at least one transmission comprises only one transmission of the first SRS resource before the first signaling.

As one embodiment, the at least one transmission comprises a most recent one transmission of the first SRS resource before the first signaling.

As one embodiment, the at least one transmission comprises a non-most recent one transmission of the first SRS resource before the first signaling.

As one embodiment, the at least one transmission is only one transmission of the first SRS resource before the first signaling.

As one embodiment, the at least one transmission is a most recent one transmission of the first SRS resource before the first signaling.

As one embodiment, the at least one transmission is a non-most recent one transmission of the first SRS resource before the first signaling.

As one embodiment, "most recent" refers to: latest.

As one embodiment, "most recent" refers to: closest to the first signaling in a time domain.

As one embodiment, "before the first signaling" comprises: "before a physical channel bearing the first signaling".

As one embodiment, "before the first signaling" comprises: "before a PDCCH bearing the first signaling".

As one embodiment, "before the first signaling" comprises: earlier than the first signaling.

As one embodiment, "before the first signaling" comprises: received earlier than the first signaling.

As one embodiment, "before the first signaling" comprises: sent earlier than first signaling.

As one embodiment, "before a physical channel bearing the first signaling" comprises: received earlier than a physical channel bearing the first signaling.

As one embodiment, "before a physical channel bearing the first signaling" comprises: sent earlier than a physical channel bearing the first signaling.

As one embodiment, "before a PDCCH bearing the first signaling" comprises: received earlier than a PDCCH bearing the first signaling.

As one embodiment, "before a PDCCH bearing the first signaling" comprises: sent earlier than a PDCCH bearing the first signaling.

As one embodiment, "the at least one transmission depends on the reference time-domain resource set" comprises: determination of the at least one transmission depends on the reference time-domain resource set.

As one embodiment, "the at least one transmission depends on the reference time-domain resource set" comprises: which transmission of the first SRS resource before the first signaling is comprised in the at least one transmission depends on the reference time-domain resource set.

As one embodiment, "the at least one transmission depends on the reference time-domain resource set" comprises: which transmissions of the first SRS resource before the first signaling are comprised in the at least one transmission depends on the reference time-domain resource set.

As one embodiment, "the at least one transmission depends on the reference time-domain resource set" comprises: which transmission or transmissions of the first SRS resource before the first signaling is or are comprised in the at least one transmission depends on the reference time-domain resource set.

As one embodiment, when one transmission of the first SRS resource overlaps with the reference time-domain resource set in the time domain, sending of the one transmission of the first SRS resource is abandoned.

As one embodiment, when one transmission of the first SRS resource overlaps with the reference time-domain resource set in the time domain, in the one transmission of the first SRS resource, only signals belonging to a reference frequency-domain resource set in a frequency domain are sent.

As one embodiment, when one transmission of the first SRS resource overlaps with the reference time-domain resource set in the time domain, signals on only some of antenna ports in the one transmission of the first SRS resource are sent.

As one embodiment, the meaning of "one transmission of the first SRS resource overlaps with the reference time-domain resource set in the time domain" refers to: one transmission of the first SRS resource belongs to the reference time-domain resource set in the time domain.

As one embodiment, the meaning of "one transmission of the first SRS resource overlaps with the reference time-domain resource set in the time domain" refers to: one transmission of the first SRS resource partially or completely overlaps with the reference time-domain resource set in the time domain.

As one embodiment, when one transmission of the first SRS resource is orthogonal to the reference time-domain resource set in the time domain, the one transmission of the first SRS resource is sent.

As one embodiment, when one transmission of the first SRS resource is orthogonal to the reference time-domain resource set in the time domain and the one transmission of the first SRS resource does not conflict with other signals or channels, sending of the one transmission of the first SRS resource is abandoned.

As one embodiment, when one transmission of the first SRS resource is orthogonal to the reference time-domain resource set in the time domain and the one transmission of the first SRS resource does not conflict with other signals or channels, the one transmission of the first SRS resource is sent, or sending of the one transmission of the first SRS resource is abandoned.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNBs 204. The gNB203 provides user and control plane protocol termination toward the UE201. The gNB203 may be connected to the other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are conveyed through the S-GW/UPF212, and the S-GW/UPF212 is connected to the P-GW/UPF213 by itself. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, a first node in the present application comprises the UE201.

As one embodiment, the first node in the present application comprises the UE241.

As one embodiment, a second node in the present application comprises the gNB203.

As one embodiment, the UE201 supports Energy Saving on a base station side.

As one embodiment, the gNB203 supports Energy Saving on a base station side.

### Embodiment 3

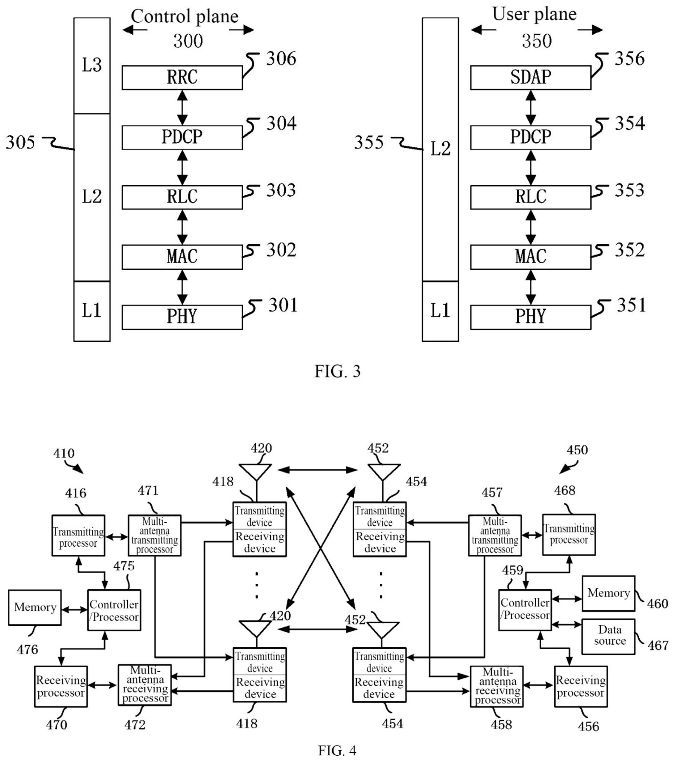

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, a gNB or an RSU in V2X) and a second communication node device (a gNB, UE or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as that for corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at the P-GW on the network side and an application layer terminating at the other end (e.g., remote UE and a server, etc.) of a connection.

As one embodiment, the wireless protocol architecture in FIG. 3 is applicable to a first node in the present application.

As one embodiment, the wireless protocol architecture in FIG. 3 is applicable to a second node in the present application.

As one embodiment, a first information block is generated at the RRC sublayer 306.

As one embodiment, the first information block is generated at the MAC sublayer 302.

As one embodiment, the first information block is generated at the MAC sublayer 352.

As one embodiment, the first information block is generated at the PHY301.

As one embodiment, the first information block is generated at a PHY351.

As one embodiment, a second information block is generated at the RRC sublayer 306.

As one embodiment, the second information block is generated at the MAC sublayer 302.

As one embodiment, the second information block is generated at the MAC sublayer 352.

As one embodiment, the second information block is generated at the PHY301.

As one embodiment, the second information block is generated at the PHY351.

As one embodiment, first signaling is generated at the PHY301.

As one embodiment, the first signaling is generated at the PHY351.

As one embodiment, a first signal is generated at the PHY301.

As one embodiment, the first signal is generated at the PHY351.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, an upper-layer data packet from a core network is provided to the controller/processor 475. The controller/processor 475 implements the functionality of an L2 layer. In a DL, the controller/processor 475 provides header compression, encryption, packet segmentation and reordering, multiplexing between logical and transport channels, and radio resource assignment to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to produce a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, converts the radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for channel estimation, and any parallel stream destined for the second communication device 450 is recovered from the data signal after undergoing multi-antenna detection in the multi-antenna receiving processor 458. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the DL (DownLink), the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing. The controller/processor 459 is also responsible for error detection using an ACK and/or NACK protocol to support HARQ operations.

In a transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on the radio resource assignment of the first communication device 410, and implements L2 layer functions for the user plane and the control plane. The controller/processor 459 is also responsible for HARQ operations, retransmission of lost packets, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced parallel stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transport and logical channels, packet reassembly, decryption, header decompression, and control signal processing to recover upper-layer data packets from the second communications device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first information block, wherein the first information block is used for determining a reference time-domain resource set; receives first signaling; and sends a first signal, wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, the second communication device 450 comprises: a memory storing a computer-readable instruction program, the computer-readable instruction program generating actions when executed by at least one processor, and the actions comprising: receiving the first information block, wherein the first information block is used for determining the reference time-domain resource set; receiving the first signaling; and sending the first signal, wherein the first signaling comprises the first domain, the first domain in the first signaling indicates the first SRI, and the first domain comprises at least one bit; the first SRI indicates the first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least: sends the first information block, wherein the first information block is used for determining the reference time-domain resource set; sends the first signaling; and receives the first signal, wherein the first signaling comprises the first domain, the first domain in the first signaling indicates the first SRI, and the first domain comprises at least one bit; the first SRI indicates the first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, the first communication device 410 comprises: a memory storing a computer-readable instruction program, the computer-readable instruction program generating actions when executed by at least one processor, and the actions comprising: sending the first information block, wherein the first information block is used for determining the reference time-domain resource set; sending the first signaling; and receiving the first signal, wherein the first signaling comprises the first domain, the first domain in the first signaling indicates the first SRI, and the first domain comprises at least one bit; the first SRI indicates the first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving a second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the transmitting device 454, the transmitting processor 468, the multi-antenna transmitting processor 457, the controller/processor 459, and the memory 460} is used for sending the first signal in the present application; and at least one of {the antenna 420, the receiving device 418, the receiving processor 470, the multi-antenna receiving processor 472, the controller/processor 475, and the memory 476} is used for receiving the first signal in the present application.

### Embodiment 5

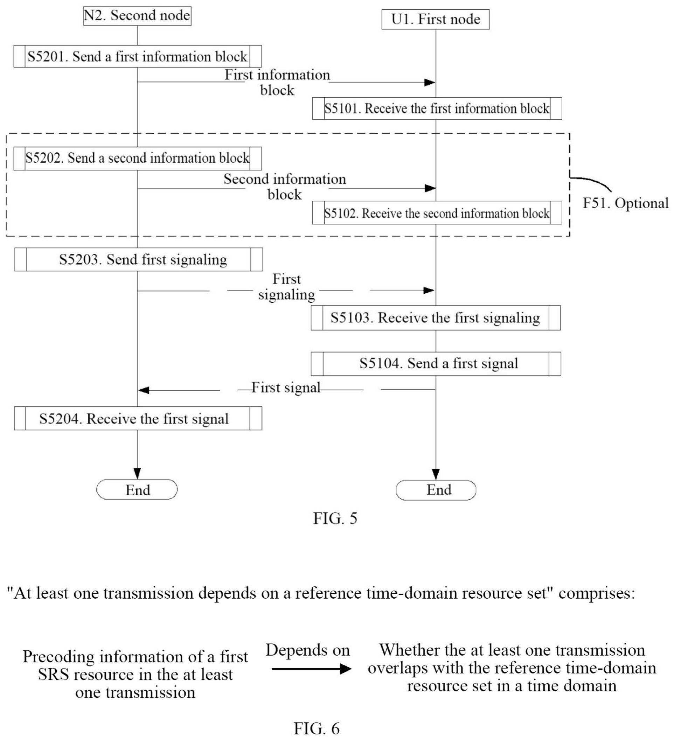

Embodiment 5 illustrates a flowchart of wireless transmission according to one embodiment of the present application, as shown in FIG. 5. In FIG. 5, a first node U1 and a second node N2 are two communication nodes transmitted through an air interface, respectively, wherein steps in a block F51 are optional.

For **the first node U1**, a first information block is received in step S5101; a second information block is received in step S5102; first signaling is received in step S5103; and a first signal is sent in step S5104.

For **the second node N2,** the first information block is sent in step S5201; the second information block is sent in step S5202; the first signaling is sent in step S5203; and the first signal is received in step S5204.

In Embodiment 5, the first information block is used for determining a reference time-domain resource set; the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, a transmission of the first SRS resource is one transmission occasion of the first SRS resource.

As one embodiment, the first node U1 is a first node in the present application.

As one embodiment, the second node N2 is a second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first information block and the second information block belong to a same RRC IE.

As one embodiment, the first information block and the second information block respectively belong to two RRC IEs.

As one embodiment, the first information block and the second information block are simultaneously received.

As one embodiment, the first information block and the second information block are received together.

As one embodiment, the first information block is received earlier than the second information block.

As one embodiment, the first information block is received not earlier than the second information block.

As one embodiment, the first information block and the second information block are received earlier than the first signaling.

As one embodiment, the first information block and the second information block are received earlier than the first signal.

As one embodiment, the first information block is transmitted in a PDSCH (Physical downlink shared channel).

As one embodiment, the first information block is transmitted in a PDCCH (Physical Downlink Control Channel).

As one embodiment, the second information block is transmitted in a PDCCH.

As one embodiment, the second information block is transmitted in a PDSCH.

As one embodiment, the first signaling is transmitted in a PDCCH.

As one embodiment, the first signal is transmitted in a PUSCH.

As one embodiment, steps in the block F51 in FIG. 5 exist. The above method used in the first node U1 for wireless communication comprises: receiving the second information block, wherein the second information block is used for determining a reference frequency-domain resource set; and a UL transmission in one or more symbols configured by higher-layer parameters as DL in the reference time-domain resource set belongs to the reference frequency-domain resource set in a frequency domain.

As one embodiment, steps in the block F51 in FIG. 5 exist. The above method used in a second node N2 for wireless communication comprises: sending the second information block, wherein the second information block is used for determining the reference frequency-domain resource set; and a UL transmission in one or more symbols configured by higher-layer parameters as DL in the reference time-domain resource set belongs to the reference frequency-domain resource set in the frequency domain.

As one embodiment, the meaning of "two antenna ports are quasi-co-located" comprises: the two antenna ports have same QCL parameters.

As one embodiment, the meaning of "two antenna ports are quasi-co-located" comprises: the two antenna ports have same QCL parameters of a TypeD.

As one embodiment, the meaning of "two antenna ports are quasi-co-located" comprises: the two antenna ports have same spatial Rx parameters.

As one embodiment, the meaning of "two antenna ports are not quasi-co-located" comprises: the two antenna ports have different QCL parameters.

As one embodiment, the meaning of "two antenna ports are not quasi-co-located" comprises: the two antenna ports have different QCL parameters of the TypeD.

As one embodiment, the meaning of "two antenna ports are not quasi-co-located" comprises: the two antenna ports have different spatial Rx parameters.

As one embodiment, types of the QCL parameters comprise a TypeA, a TypeB, a TypeC, and the TypeD.

As one embodiment, QCL parameters of the TypeA comprise a Doppler shift, a Doppler spread, an average delay, and a delay spread.

As one embodiment, QCL parameters of the TypeB comprise the Doppler shift and the Doppler spread.

As one embodiment, QCL parameters of the TypeC comprise the Doppler shift and the average delay.

As one embodiment, QCL parameters of the TypeD comprise spatial Rx parameters.

As one embodiment, for the specific definitions of the TypeA, the TypeB, the TypeC and the TypeD, refer to Chapter 5.1.5 of 3GPP TS38.214.

As one embodiment, the QCL parameters comprise one or more of the delay spread, the Doppler spread, the Doppler shift, the average delay, or the spatial Rx parameters.

As one embodiment, the QCL parameters comprise the Doppler shift and the Doppler spread.

As one embodiment, the QCL parameters comprise the Doppler shift and the average delay.

As one embodiment, the QCL parameters comprise the spatial Rx parameters.

As one embodiment, the QCL parameters comprise at least one of spatial Tx parameters or the spatial Rx parameters.

As one embodiment, the QCL parameters comprise a spatial domain receive filter.

As one embodiment, the QCL parameters comprise a spatial domain filter.

As one embodiment, the QCL parameters comprise at least one of a spatial domain transmit filter or the spatial domain receive filter.

As one embodiment, one TCI (Transmission configuration indication) state indicates one quasi co-location relationship.

As one embodiment, one TCI state indicates one or more RS resources.

As one embodiment, one TCI state indicates at least one RS resource.

As one embodiment, any RS resource indicated by one TCI state is one of an SRS resource, a CSI-RS resource, or an SS/PBCH block resource.

As one embodiment, any RS resource indicated by one TCI state is a CSI-RS resource or SS/PBCH block resource.

As one embodiment, one TCI state indicates at least one RS resource and a QCL (Quasi-Co-Location) parameter corresponding to each RS resource among the at least one RS resource.

As one embodiment, one TCI state indicates at least one RS resource and a type of a QCL parameter corresponding to each RS resource among the at least one RS resource.

As one embodiment, for the specific definitions of the TCI state and the Quasi Co-Location (QCL), refer to Chapter 5.1.5 of 3GPP TS38.214.

### Embodiment 6

Embodiment 6 illustrates a schematic diagram of at least one transmission depending on a reference time-domain resource set according to one embodiment of the present application, as shown in FIG. 6.

In Embodiment 6, "at least one transmission depending on a reference time-domain resource set" comprises: precoding information of a first SRS resource in the at least one transmission depends on whether the at least one transmission overlaps with the reference time-domain resource set in a time domain.

As one embodiment, the meaning of "whether the at least one transmission overlaps with the reference time-domain resource set in a time domain" refers to: either the at least one transmission belongs to the reference time-domain resource set or is orthogonal to the reference time-domain resource set in the time domain.

As one embodiment, the meaning of "whether the at least one transmission overlaps with the reference time-domain resource set in a time domain" refers to: whether the at least one transmission partially or completely overlaps with the reference time-domain resource set in the time domain.

As one embodiment, the meaning of "whether the at least one transmission overlaps with the reference time-domain resource set in a time domain" comprises: whether one transmission among the at least one transmission overlaps with the reference time-domain resource set in the time domain.

As one embodiment, the meaning of "whether the at least one transmission overlaps with the reference time-domain resource set in a time domain" comprises: whether a latest one transmission among the at least one transmission overlaps with the reference time-domain resource set in the time domain.

As one embodiment, the precoding information comprises a precoder.

As one embodiment, the precoding information comprises the number of precoders.

As one embodiment, the precoding information comprises the number of precoders and each precoder among the precoders.

As one embodiment, the meaning of "precoding information of a first SRS resource in the at least one transmission depends on whether the at least one transmission overlaps with the reference time-domain resource set in a time domain" comprises: whether precoding information of the first SRS resource in the at least one transmission is updated depends on whether the at least one transmission overlaps with the reference time-domain resource set in the time domain.

As one embodiment, the meaning of "precoding information of a first SRS resource in the at least one transmission depends on whether the at least one transmission overlaps with the reference time-domain resource set in a time domain" comprises: whether precoding information of the first SRS resource in the at least one transmission is updated depends on whether the at least one transmission comprises one transmission that overlaps with the reference time-domain resource set in the time domain.

As one embodiment, the meaning of "precoding information of a first SRS resource in the at least one transmission depends on whether the at least one transmission overlaps with the reference time-domain resource set in a time domain" comprises: the at least one transmission comprises a most recent one transmission of the first SRS resource before first signaling; and compared with "one transmission of the first SRS resource before the at least one transmission", whether precoding information of the first SRS resource in the at least one transmission is updated depends on whether the at least one transmission overlaps with the reference time-domain resource set in the time domain.

As one embodiment, the meaning of "precoding information of a first SRS resource in the at least one transmission depends on whether the at least one transmission overlaps with the reference time-domain resource set in a time domain" comprises: the at least one transmission comprises a most recent one transmission of the first SRS resource before the first signaling; and compared with "a most recent one transmission of the first SRS resource before the at least one transmission", whether precoding information of the first SRS resource in the at least one transmission is updated depends on whether the at least one transmission overlaps with the reference time-domain resource set in the time domain.

As one embodiment, the meaning of "precoding information of a first SRS resource in the at least one transmission depends on whether the at least one transmission overlaps with the reference time-domain resource set in a time domain" comprises: the at least one transmission comprises a most recent one transmission of the first SRS resource before the first signaling; and compared with a most recent one transmission of the first SRS resource "before the at least one transmission and orthogonal to the reference time-domain resource set", whether precoding information of the first SRS resource in the at least one transmission is updated depends on whether the at least one transmission overlaps with the reference time-domain resource set in the time domain.

As one embodiment, the meaning of "whether precoding information of the first SRS resource in the at least one transmission is updated depends on whether the at least one transmission overlaps with the reference time-domain resource set in the time domain" comprises: whether precoding information of the first SRS resource in the at least one transmission is expected to be updated depends on whether the at least one transmission overlaps with the reference time-domain resource set in the time domain.

As one embodiment, the meaning of "whether precoding information of the first SRS resource in the at least one transmission is updated depends on whether the at least one transmission overlaps with the reference time-domain resource set in the time domain" comprises: when the at least one transmission overlaps with the reference time-domain resource set in the time domain, precoding information of the first SRS resource in the at least one transmission is not updated.

As one embodiment, the meaning of "the at least one transmission overlaps with the reference time-domain resource set in the time domain" refers to: the at least one transmission belongs to the reference time-domain resource set in the time domain.

As one embodiment, the meaning of "the at least one transmission overlaps with the reference time-domain resource set in the time domain" refers to: the at least one transmission partially or completely overlaps with the reference time-domain resource set in the time domain.

As one embodiment, the meaning of "precoding information of the first SRS resource in the at least one transmission is not updated" comprises: precoding information of the first SRS resource in the at least one transmission is not expected to be updated.

As one embodiment, the meaning of "precoding information of the first SRS resource in the at least one transmission is not updated" comprises: a sender of the first signaling assumes that precoding information of the first SRS resource in the at least one transmission is not updated.

As one embodiment, the meaning of "precoding information of the first SRS resource in the at least one transmission is not updated" comprises: the sender of the first signaling believes that precoding information of the first SRS resource in the at least one transmission is not updated.

As one embodiment, the meaning of "whether precoding information of the first SRS resource in the at least one transmission is updated depends on whether the at least one transmission overlaps with the reference time-domain resource set in the time domain" comprises: when the at least one transmission is orthogonal to the reference time-domain resource set in the time domain, precoding information of the first SRS resource in the at least one transmission is updated or not updated.

As one embodiment, the meaning of "whether precoding information of the first SRS resource in the at least one transmission is updated depends on whether the at least one transmission overlaps with the reference time-domain resource set in the time domain" comprises: when the at least one transmission is orthogonal to the reference time-domain resource set in the time domain, whether precoding information of the first SRS resource in the at least one transmission is updated is determined by a first node itself.

As one embodiment, the meaning of "whether precoding information of the first SRS resource in the at least one transmission is updated depends on whether the at least one transmission overlaps with the reference time-domain resource set in the time domain" comprises: when the at least one transmission is orthogonal to the reference time-domain resource set in the time domain, whether precoding information of the first SRS resource in the at least one transmission is updated is related to implementation of the first node.

As one embodiment, "before the at least one transmission" refers to: earlier than the at least one transmission.

As one embodiment, "before the at least one transmission" refers to: sent earlier than the at least one transmission.

### Embodiments 7A-7C

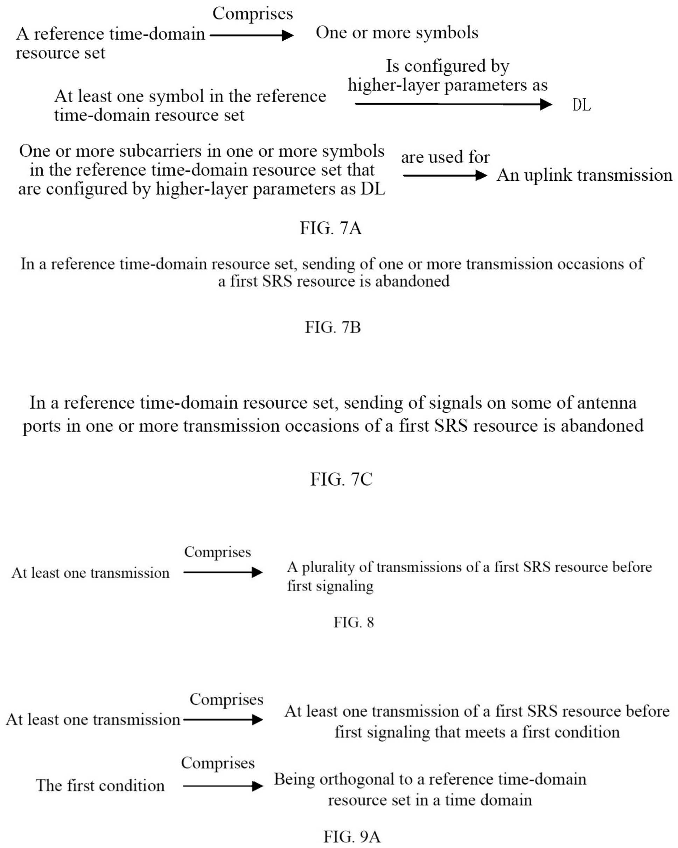

Embodiments 7A-7C respectively illustrate schematic diagrams of a reference time-domain resource set according to one embodiment of the present application, as shown in FIGs. 7A-7C.

In Embodiment 7A, the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission.

As one embodiment, a frequency-domain resource configured for a first SRS resource comprises at least one RB in a reference frequency-domain resource set and at least one RB other than the reference frequency-domain resource set; and when one transmission of the first SRS resource overlaps with the reference time-domain resource set in a time domain, sending of the one transmission of the first SRS resource is abandoned.

As one embodiment, a frequency-domain resource configured for the first SRS resource comprises at least one RB in the reference frequency-domain resource set and at least one RB other than the reference frequency-domain resource set; and when one transmission of the first SRS resource overlaps with the reference time-domain resource set in the time domain, only some of the one transmission of the first SRS resource that belong to the reference frequency-domain resource set in the frequency domain are sent.

As one embodiment, a frequency-domain resource configured for the first SRS resource comprises at least one subcarrier in the reference frequency-domain resource set and at least one subcarrier other than the reference frequency-domain resource set; and when one transmission of the first SRS resource overlaps with the reference time-domain resource set in the time domain, sending of the one transmission of the first SRS resource is abandoned.

As one embodiment, a frequency-domain resource configured for the first SRS resource comprises at least one subcarrier in the reference frequency-domain resource set and at least one subcarrier other than the reference frequency-domain resource set; and when one transmission of the first SRS resource overlaps with the reference time-domain resource set in the time domain, only some of the one transmission of the first SRS resource that belong to the reference frequency-domain resource set in the frequency domain are sent.

As one embodiment, a frequency-domain resource configured for the first SRS resource belongs to the reference frequency-domain resource set; and when one transmission of the first SRS resource overlaps with the reference time-domain resource set in the time domain, sending of the one transmission of the first SRS resource is abandoned.

As one embodiment, a frequency-domain resource configured for the first SRS resource belongs to the reference frequency-domain resource set; and when one transmission of the first SRS resource overlaps with the reference time-domain resource set in the time domain, the one transmission of the first SRS resource is sent.

As one embodiment, a frequency-domain resource configured for the first SRS resource is orthogonal to the reference frequency-domain resource set; and when one transmission of the first SRS resource overlaps with the reference time-domain resource set in the time domain, sending of the one transmission of the first SRS resource is abandoned.

As one embodiment, when the one transmission of the first SRS resource overlaps with the reference time-domain resource set in the time domain, the one transmission of the first SRS resource occupies at least one of a DL symbol or a Flexible symbol in the time domain; and when the one transmission of the first SRS resource is orthogonal to the reference time-domain resource set in the time domain, the one transmission of the first SRS resource occupies at least one of the UL symbol or the Flexible symbol in the time domain.

As one embodiment, when one transmission of the first SRS resource overlaps with the reference time-domain resource set in the time domain, a time-domain resource occupied by the one transmission of the first SRS resource comprises at least one DL symbol; and when the one transmission of the first SRS resource is orthogonal to the reference time-domain resource set in the time domain, the time-domain resource occupied by the one transmission of the first SRS resource comprises at least one UL symbol.

As one embodiment, the meaning of "one transmission of the first SRS resource overlaps with the reference time-domain resource set in the time domain" refers to: one transmission of the first SRS resource belongs to the reference time-domain resource set in the time domain.

As one embodiment, the meaning of "one transmission of the first SRS resource overlaps with the reference time-domain resource set in the time domain" refers to: one transmission of the first SRS resource partially or completely overlaps with the reference time-domain resource set in the time domain.

In Embodiment 7B, in the reference time-domain resource set, sending of one or more transmissions of the first SRS resource is abandoned.

In Embodiment 7C, in the reference time-domain resource set, sending of signals on some of antenna ports in one or more transmissions of the first SRS resource is abandoned.

As one embodiment, at least one index indicates at least one RS resource, at least one RS resource is deactivated in the reference time-domain resource set, and a given signal is associated with the at least one RS resource.

As one embodiment, the at least one index indicates at least one RS resource, an effective time when the at least one RS resource is deactivated comprises the reference time-domain resource set, and a given signal is associated with the at least one RS resource.

As one embodiment, the meaning of "a given signal is associated with the at least one RS resource" comprises: the given signal belongs to the at least one RS resource.

As one embodiment, the meaning of "a given signal is associated with the at least one RS resource" comprises: the given signal is associated with one RS resource among the at least one RS resource.

As one embodiment, the meaning of "a given signal is associated with the at least one RS resource" comprises: the given signal is associated with some or all of RS resources among at least one RS resource.

As one embodiment, the meaning of "a given signal is associated with a given RS resource" comprises: the given signal and the given RS resource have a same spatial relationship.

As one embodiment, the spatial relationship comprises a TCI (Transmission Configuration Indicator) state.

As one embodiment, the spatial relationship comprises an antenna port.

As one embodiment, the spatial relationship comprises a spatial domain filter.

As one embodiment, the spatial domain filter comprises a spatial domain transmission filter.

As one embodiment, the spatial domain filter comprises a spatial domain receive filter.

As one embodiment, the spatial domain filter refers to a spatial filter.

As one embodiment, the spatial filter comprises a Tx spatial filter.

As one embodiment, the spatial filter comprises an Rx spatial filter.

As one embodiment, the spatial relationship comprises a spatial Tx parameter.

As one embodiment, the spatial relationship comprises a spatial Rx parameter.

As one embodiment, the spatial relationship comprises an antenna port.

As one embodiment, the spatial relationship comprises large-scale properties.

As one embodiment, the large-scale properties comprise one or more of a delay spread, a Doppler spread, a Doppler shift, an average delay, or a spatial Rx parameter.

As one embodiment, the at least one index indicates at least one RS resource, the at least one RS resource is activated in the reference time-domain resource set, and a given signal is not associated with the at least one RS resource.

As one embodiment, the at least one index indicates at least one RS resource, an effective time when the at least one RS resource is activated comprises the reference time-domain resource set, and a given signal is not associated with the at least one RS resource.

As one embodiment, the meaning of "a given signal is not associated with the at least one RS resource" comprises: the given signal is not associated with each RS resource among the at least one RS resource.

As one embodiment, the meaning of "a given signal is not associated with the at least one RS resource" comprises: the given signal is not associated with one RS resource among the at least one RS resource.

As one embodiment, the meaning of "a given signal is not associated with a given RS resource" comprises: the given signal and the given RS resource have different spatial relationships.

As one embodiment, the at least one index indicates at least one TCI state, the at least one TCI state is deactivated in the reference time-domain resource set, and a given signal is associated with the at least one TCI state.

As one embodiment, the at least one index indicates at least one TCI state, an effective time when the at least one TCI state is deactivated comprises the reference time-domain resource set, and a given signal is associated with the at least one TCI state.

As one embodiment, the meaning of "a given signal is associated with the at least one TCI state" comprises: the given signal is associated with one TCI state among the at least one TCI state.

As one embodiment, the meaning of "a given signal is associated with the at least one TCI state" comprises: the given signal is associated with some or all of TCI states among the at least one TCI state.

As one embodiment, the meaning of "a given signal is associated with the at least one TCI state" comprises: one TCI state among the at least one TCI state is used for a transmission of the given signal.

As one embodiment, the meaning of "a given signal is associated with the at least one TCI state" comprises: one TCI state among the at least one TCI state is used for indicating a spatial relationship of the given signal.

As one embodiment, the meaning of "a given signal is associated with the at least one TCI state" comprises: at least one RS resource indicated by one TCI state among the at least one TCI state comprises the given signal.

As one embodiment, the meaning of "a given signal is associated with the at least one TCI state" comprises: one TCI state among the at least one TCI state indicates a spatial relationship between at least one RS resource and the given signal.

As one embodiment, the meaning of "a given signal is associated with the at least one TCI state" comprises: the given signal is associated with at least one RS resource indicated by one TCI state among the at least one TCI state.

As one embodiment, the meaning of "a given signal is associated with the at least one TCI state" comprises: the given signal is associated with one RS resource indicated by one TCI state among the at least one TCI state.

As one embodiment, the meaning of "a given signal is associated with a given RS resource" comprises: the given RS resource is applied to a transmission of the given signal.

As one embodiment, the meaning of "a given signal is associated with a given RS resource" comprises: a sending beam of the given signal is the same as a sending beam or receiving beam of the given RS resource.

As one embodiment, the meaning of "a given signal is associated with a given RS resource" comprises: the given RS resource is a DL RS resource, and a sending beam of the given signal is the same as a receiving beam of the given RS resource.

As one embodiment, the meaning of "a given signal is associated with a given RS resource" comprises: the given RS resource is a UL RS resource, and a sending beam of the given signal is the same as a sending beam of the given RS resource.

As one embodiment, the meaning of "a given signal is associated with a given RS resource" comprises: spatial Tx parameters of the given signal are the same as spatial Tx parameters or spatial Rx parameters of the given RS resource.

As one embodiment, the meaning of "a given signal is associated with a given RS resource" comprises: the given RS resource is a DL RS resource, and spatial Tx parameters of the given signal are the same as spatial Rx parameters of the given RS resource.

As one embodiment, the meaning of "a given signal is associated with a given RS resource" comprises: the given RS resource is a UL RS resource, and spatial Tx parameters of the given signal are the same as spatial Tx parameters of the given RS resource.

As one embodiment, the meaning of "a given signal is associated with a given RS resource" comprises: a spatial domain filter used for sending the given signal is the same as a spatial domain filter used for sending or receiving the given RS resource.

As one embodiment, the meaning of "a given signal is associated with a given RS resource" comprises: the given RS resource is a DL RS resource, and a spatial domain filter used for sending the given signal is the same as a spatial domain filter used for receiving the given RS resource.

As one embodiment, the meaning of "a given signal is associated with a given RS resource" comprises: the given RS resource is a UL RS resource, and a spatial domain filter used for sending the given signal is the same as a spatial domain filter used for sending the given RS resource.

As one embodiment, the given RS resource is one RS resource indicated by one TCI state among the at least one TCI state.

As one embodiment, the given RS resource is one RS resource indicated by the at least one index.

As one embodiment, the at least one index indicates at least one TCI state, the at least one TCI state is activated in the reference time-domain resource set, and a given signal is not associated with the at least one TCI state.

As one embodiment, the at least one index indicates at least one TCI state, an effective time when the at least one TCI state is activated comprises the reference time-domain resource set, and a given signal is not associated with the at least one TCI state.

As one embodiment, the meaning of "a given signal is not associated with a given TCI state" comprises: the given TCI state is not used for a transmission of the given signal.

As one embodiment, the meaning of "a given signal is not associated with a given TCI state" comprises: the given TCI state is not used for indicating a spatial relationship of the given signal.

As one embodiment, the meaning of "a given signal is not associated with a given TCI state" comprises: at least one RS resource indicated by the given TCI state does not comprise the given signal.

As one embodiment, the meaning of "a given signal is not associated with the at least one TCI state" comprises: the given signal is not associated with each TCI state among the at least one TCI state.

As one embodiment, the meaning of "a given signal is not associated with the at least one TCI state" comprises: the given signal is not associated with one TCI state among the at least one TCI state.

As one embodiment, the meaning of "a given signal is not associated with a given RS resource" comprises: the given RS resource is not applied to a transmission of the given signal.

As one embodiment, the meaning of "a given signal is not associated with a given RS resource" comprises: a sending beam of the given signal is different from a sending beam or receiving beam of the given RS resource.

As one embodiment, the meaning of "a given signal is not associated with a given RS resource" comprises: the given RS resource is a DL RS resource, and a sending beam of the given signal is different from a receiving beam of the given RS resource.

As one embodiment, the meaning of "a given signal is not associated with a given RS resource" comprises: the given RS resource is a UL RS resource, and a sending beam of the given signal is different from a sending beam of the given RS resource.

As one embodiment, the meaning of "a given signal is not associated with a given RS resource" comprises: spatial Tx parameters of the given signal are different from spatial Tx parameters or spatial Rx parameters of the given RS resource.

As one embodiment, the meaning of "a given signal is not associated with a given RS resource" comprises: the given RS resource is a DL RS resource, and spatial Tx parameters of the given signal are different from spatial Rx parameters of the given RS resource.

As one embodiment, the meaning of "a given signal is not associated with a given RS resource" comprises: the given RS resource is a UL RS resource, and spatial Tx parameters of the given signal are different from spatial Tx parameters of the given RS resource.

As one embodiment, the meaning of "a given signal is not associated with a given RS resource" comprises: a spatial domain filter used for sending the given signal is different from a spatial domain filter used for sending or receiving the given RS resource.

As one embodiment, the meaning of "a given signal is not associated with a given RS resource" comprises: the given RS resource is a DL RS resource, and a spatial domain filter used for sending the given signal is different from a spatial domain filter used for receiving the given RS resource.

As one embodiment, the meaning of "a given signal is not associated with a given RS resource" comprises: the given RS resource is a UL RS resource, and a spatial domain filter used for sending the given signal is different from a spatial domain filter used for sending the given RS resource.

As one embodiment, the at least one index indicates at least one antenna port, the at least one antenna port is deactivated in the reference time-domain resource set, and a given signal is associated with the at least one antenna port.

As one embodiment, the at least one index indicates at least one antenna port, an effective time when the at least one antenna port is deactivated comprises the reference time-domain resource set, and a given signal is associated with the at least one antenna port.

As one embodiment, the meaning of "a given signal is associated with the at least one antenna port" comprises: some or all of antenna ports among the at least one antenna port are used for a transmission of the given signal.

As one embodiment, the meaning of "a given signal is associated with the at least one antenna port" comprises: an antenna port for a transmission of the given signal belongs to the at least one antenna port.

As one embodiment, the meaning of "a given signal is associated with the at least one antenna port" comprises: at least one antenna port for a transmission of the given signal is the same as the at least one antenna port.

As one embodiment, the meaning of "a given signal is associated with the at least one antenna port" comprises: a sending beam of the given signal is the same as a sending beam or receiving beam of some or all of antenna ports among at least one antenna port.

As one embodiment, the meaning of "a given signal is associated with the at least one antenna port" comprises: the at least one antenna port comprises an antenna port of a DL RS resource, and a sending beam of the given signal is the same as a receiving beam of the antenna port of the DL RS resource in the at least one antenna port.

As one embodiment, the meaning of "a given signal is associated with the at least one antenna port" comprises: the at least one antenna port comprises an antenna port of a UL RS resource, and a sending beam of the given signal is the same as a sending beam of the antenna port of the UL RS resource in the at least one antenna port.

As one embodiment, a UL RS resource comprises an SRS (Sounding Reference Signal) resource.

As one embodiment, a UL RS resource comprises at least one of an SRS resource, a PTRS (Phase-tracking reference signal), and DMRS (Demodulation reference signals).

As one embodiment, a DL RS resource comprises a CSI-RS (Channel State Information Reference Signal) resource.

As one embodiment, a DL RS resource comprises a CSI-RS resource or an SS/PBCH (Synchronization Signal/Physical Broadcast Channel) block resource.

As one embodiment, a DL RS resource comprises at least one of a CSI-RS resource and an SS/PBCH block resource.

As one embodiment, the at least one index indicates at least one antenna port, the at least one antenna port is activated in the reference time-domain resource set, and a given signal is not associated with the at least one antenna port.

As one embodiment, the at least one index indicates at least one antenna port, an effective time when the at least one antenna port is activated comprises the reference time-domain resource set, and a given signal is not associated with the at least one antenna port.

As one embodiment, the meaning of "a given signal is not associated with the at least one antenna port" comprises: each antenna port among the at least one antenna port is not used for a transmission of the given signal.

As one embodiment, the meaning of "a given signal is not associated with the at least one antenna port" comprises: one antenna port among the at least one antenna port is not used for a transmission of the given signal.

As one embodiment, the meaning of "a given signal is not associated with the at least one antenna port" comprises: an antenna port for a transmission of the given signal does not belong to the at least one antenna port.

As one embodiment, the meaning of "a given signal is not associated with the at least one antenna port" comprises: an antenna port for a transmission of the given signal is different from the at least one antenna port.

As one embodiment, the meaning of "a given signal is not associated with the at least one antenna port" comprises: a sending beam of the given signal is different from a sending beam or receiving beam of one antenna port among the at least one antenna port.

As one embodiment, the meaning of "a given signal is not associated with the at least one antenna port" comprises: a sending beam of the given signal is different from a sending beam or receiving beam of each antenna port among the at least one antenna port.

As one embodiment, the meaning of "a given signal is not associated with the at least one antenna port" comprises: the at least one antenna port comprises an antenna port of a DL RS resource, and a sending beam of the given signal is different from a receiving beam of the antenna port of the DL RS resource in the at least one antenna port.

As one embodiment, the meaning of "a given signal is not associated with the at least one antenna port" comprises: the at least one antenna port comprises an antenna port of a UL RS resource, and a sending beam of the given signal is different from a sending beam of the antenna port of the UL RS resource in the at least one antenna port.

As one embodiment, the at least one index indicates at least one CORESET, the at least one CORESET is deactivated in the reference time-domain resource set, and a given signal is associated with the at least one CORESET.

As one embodiment, the at least one index indicates at least one CORESET, an effective time when the at least one CORESET is deactivated comprises the reference time-domain resource set, and a given signal is associated with the at least one CORESET.

As one embodiment, the meaning of "a given signal is associated with the at least one CORESET" comprises: the given signal is associated with one CORESET among the at least one CORESET.

As one embodiment, the meaning of "a given signal is associated with the at least one CORESET" comprises: the given signal is associated with some or all of CORESETs among the at least one CORESET.

As one embodiment, the meaning of "a given signal is associated with one CORESET" comprises: the given signal is associated with a TCI state of the one CORESET.

Typically, a TCI state of one CORESET is used for receiving a PDCCH in the one CORESET.

As one embodiment, the meaning of "a given signal is associated with one CORESET" comprises: DCI signaling on a PDCCH in the one CORESET schedules or triggers the given signal.

As one embodiment, the at least one index indicates at least one CORESET, the at least one CORESET is activated in the reference time-domain resource set, and a given signal is not associated with the at least one CORESET.

As one embodiment, the at least one index indicates at least one CORESET, an effective time when the at least one CORESET is activated comprises the reference time-domain resource set, and a given signal is not associated with the at least one CORESET.

As one embodiment, the meaning of "a given signal is not associated with the at least one CORESET" comprises: the given signal is not associated with one CORESET among the at least one CORESET.

As one embodiment, the meaning of "a given signal is not associated with the at least one CORESET" comprises: the given signal is not associated with each CORESET among the at least one CORESET.

As one embodiment, the meaning of "a given signal is not associated with one CORESET" comprises: the given signal is not associated with a TCI state of the one CORESET.

As one embodiment, the meaning of "a given signal is not associated with one CORESET" comprises: DCI signaling on a PDCCH in the one CORESET is not used for scheduling or triggering the given signal.

As one embodiment, the at least one index indicates at least one CORESET pool, the at least one CORESET pool is deactivated in the reference time-domain resource set, and a given signal is associated with the at least one CORESET pool.

Typically, one CORESET pool comprises one or more CORESETs.

As one embodiment, the at least one index indicates at least one CORESET pool, an effective time when the at least one CORESET pool is deactivated comprises the reference time-domain resource set, and a given signal is associated with the at least one CORESET pool.

As one embodiment, the meaning of "a given signal is associated with the at least one CORESET pool" comprises: the given signal is associated with one CORESET pool among the at least one CORESET pool.

As one embodiment, the meaning of "a given signal is associated with the at least one CORESET pool" comprises: the given signal is associated with one CORESET in the at least one CORESET pool.

As one embodiment, the meaning of "a given signal is associated with the at least one CORESET pool" comprises: the given signal is associated with one or more CORESETs in the at least one CORESET pool.

As one embodiment, the at least one index indicates at least one CORESET pool, the at least one CORESET pool is activated in the reference time-domain resource set, and a given signal is not associated with the at least one CORESET pool.

As one embodiment, the at least one index indicates at least one CORESET pool, an effective time when the at least one CORESET pool is activated comprises the reference time-domain resource set, and a given signal is not associated with the at least one CORESET pool.

As one embodiment, the meaning of "a given signal is not associated with the at least one CORESET pool" comprises: the given signal is not associated with one CORESET pool among the at least one CORESET pool.

As one embodiment, the meaning of "a given signal is not associated with the at least one CORESET pool" comprises: the given signal is not associated with each CORESET pool among the at least one CORESET pool.

As one embodiment, the meaning of "a given signal is not associated with the at least one CORESET pool" comprises: the given signal is not associated with one CORESET in the at least one CORESET pool.

As one embodiment, the meaning of "a given signal is not associated with the at least one CORESET pool" comprises: the given signal is not associated with each CORESET in the at least one CORESET pool.

As one embodiment, the at least one index indicates at least one serving cell, the at least one serving cell is deactivated in the reference time-domain resource set, and a given signal is associated with the at least one serving cell.

As one embodiment, the at least one index indicates at least one serving cell, an effective time when the at least one serving cell is deactivated comprises the reference time-domain resource set, and a given signal is associated with the at least one serving cell.

As one embodiment, the meaning of "a given signal is associated with the at least one serving cell" comprises: the given signal is associated with one serving cell among the at least one serving cell.

As one embodiment, the meaning of "a given signal is associated with the at least one serving cell" comprises: the given signal is associated with one or more serving cells among the at least one serving cell.

As one embodiment, the meaning of "a given signal is associated with the at least one serving cell" comprises: the given signal is transmitted on one serving cell among the at least one serving cell.

As one embodiment, the meaning of "a given signal is associated with the at least one serving cell" comprises: a time-frequency domain resource for transmitting the given signal is on one serving cell among the at least one serving cell.

As one embodiment, the meaning of "a given signal is associated with the at least one serving cell" comprises: a time-frequency domain resource for transmitting the given signal is configured to one serving cell among the at least one serving cell.

As one embodiment, the meaning of "a given signal is associated with the at least one serving cell" comprises: one RS resource for a transmission of the given signal is transmitted on a resource of one serving cell among the at least one serving cell.

As one embodiment, the meaning of "a given signal is associated with the at least one serving cell" comprises: one RS resource for a transmission of the given signal belongs to one serving cell among the at least one serving cell.

As one embodiment, the meaning of "a given signal is associated with the at least one serving cell" comprises: one RS resource for a transmission of the given signal is configured to one serving cell among the at least one serving cell.

As one embodiment, the meaning of "a given signal is associated with the at least one serving cell" comprises: one antenna port for a transmission of the given signal is configured to one serving cell among the at least one serving cell.

As one embodiment, the meaning of "a given signal is associated with the at least one serving cell" comprises: one spatial filter for a transmission of the given signal is configured to one serving cell among the at least one serving cell.

As one embodiment, the at least one index indicates at least one serving cell, the at least one serving cell is activated in the reference time-domain resource set, and a given signal is not associated with the at least one serving cell.

As one embodiment, the at least one index indicates at least one serving cell, an effective time when the at least one serving cell is activated comprises the reference time-domain resource set, and a given signal is not associated with the at least one serving cell.

As one embodiment, the meaning of "a given signal is not associated with the at least one serving cell" comprises: a given signal is not associated with one serving cell among the at least one serving cell.

As one embodiment, the meaning of "a given signal is not associated with the at least one serving cell" comprises: a given signal is not associated with each serving cell among the at least one serving cell.

As one embodiment, the meaning of "a given signal is not associated with the at least one serving cell" comprises: a given signal is not transmitted on the at least one serving cell.

As one embodiment, the meaning of "a given signal is not associated with the at least one serving cell" comprises: a time-frequency domain resource for transmitting the given signal does not belong to one serving cell among the at least one serving cell.

As one embodiment, the meaning of "a given signal is not associated with the at least one serving cell" comprises: a time-frequency domain resource for transmitting the given signal is not configured to one serving cell among the at least one serving cell.

As one embodiment, the meaning of "a given signal is not associated with the at least one serving cell" comprises: one RS resource for a transmission of the given signal is not transmitted on a resource of one serving cell among the at least one serving cell.

As one embodiment, the meaning of "a given signal is associated with the at least one serving cell" comprises: one RS resource for a transmission of the given signal does not belong to one serving cell among the at least one serving cell.

As one embodiment, the meaning of "a given signal is not associated with the at least one serving cell" comprises: one RS resource for a transmission of the given signal is not configured to one serving cell among the at least one serving cell.

As one embodiment, the meaning of "a given signal is not associated with the at least one serving cell" comprises: one antenna port for a transmission of the given signal is not configured to one serving cell among the at least one serving cell.

As one embodiment, the meaning of "a given signal is not associated with the at least one serving cell" comprises: one spatial filter for a transmission of the given signal is not configured to one serving cell among the at least one serving cell.

As one embodiment, the at least one index comprises one or more of PhysCellId, SCellIndex, or ServCellIndex.

As one embodiment, the at least one index comprises one or more of PhysCellId, SCellIndex, ServCellIndex, or AdditionalPCIIndex.

As one embodiment, the at least one index indicates at least one PCI, the at least one PCI is deactivated in the reference time-domain resource set, and a given signal is associated with the at least one PCI.

As one embodiment, a PCI refers to: a Physical Cell Identity.

As one embodiment, the at least one index indicates at least one PCI, an effective time when the at least one PCI is deactivated comprises the reference time-domain resource set, and a given signal is associated with the at least one PCI.

As one embodiment, the meaning of "a given signal is associated with the at least one PCI" comprises: the given signal is associated with one PCI among the at least one PCI.

As one embodiment, the meaning of "a given signal is associated with the at least one PCI" comprises: the given signal is associated with one or more PCIs among the at least one PCI.

As one embodiment, the meaning of "a given signal is associated with the at least one PCI" comprises: one PCI among the at least one PCI is used for generating the given signal.

As one embodiment, the meaning of "a given signal is associated with the at least one PCI" comprises: one PCI among the at least one PCI is used for scrambling of one piece of DCI signaling, and the one piece of DCI signaling schedules or triggers the given signal.

As one embodiment, the meaning of "a given signal is associated with the at least one PCI" comprises: a scrambling sequence generator for generation of the given signal is initialized by one PCI among the at least one PCI.

As one embodiment, the meaning of "a given signal is associated with the at least one PCI" comprises: the given signal is associated with one cell identified or indicated by one PCI among the at least one PCI.

As one embodiment, the meaning of "a given signal is associated with a given cell" comprises: the given signal is transmitted on the given cell.

As one embodiment, the meaning of "a given signal is associated with a given cell" comprises: the given signal is sent by the given cell.

As one embodiment, the meaning of "a given signal is associated with a given cell" comprises: a time-frequency domain resource for transmitting the given signal is on the given cell.

As one embodiment, the meaning of "a given signal is associated with a given cell" comprises: a time-frequency domain resource for transmitting the given signal is configured to the given cell.

As one embodiment, the meaning of "a given signal is associated with a given cell" comprises: one RS resource for a transmission of the given signal is transmitted on a resource in the given cell.

As one embodiment, the meaning of "a given signal is associated with a given cell" comprises: one RS resource for a transmission of the given signal belongs to the given cell.

As one embodiment, the meaning of "a given signal is associated with a given cell" comprises: one RS resource for a transmission of the given signal is configured to the given cell.

As one embodiment, the meaning of "a given signal is associated with a given cell" comprises: one antenna port for a transmission of the given signal is configured to the given cell.

As one embodiment, the meaning of "a given signal is associated with a given cell" comprises: one spatial filter for a transmission of the given signal is configured to the given cell.

As one embodiment, the given cell is one cell identified or indicated by one PCI among the at least one PCI.

As one embodiment, the at least one index indicates at least one PCI, the at least one PCI is activated in the reference time-domain resource set, and a given signal is not associated with the at least one PCI.

As one embodiment, the at least one index indicates at least one PCI, an effective time when the at least one PCI is activated comprises the reference time-domain resource set, and a given signal is not associated with the at least one PCI.

As one embodiment, the meaning of "a given signal is not associated with the at least one PCI" comprises: a given signal is not associated with one PCI among the at least one PCI.

As one embodiment, the meaning of "a given signal is not associated with the at least one PCI" comprises: a given signal is not associated with each PCI among the at least one PCI.

As one embodiment, the meaning of "a given signal is not associated with the at least one PCI" comprises: any PCI among the at least one PCI is not used for generating the given signal.

As one embodiment, the meaning of "a given signal is not associated with the at least one PCI" comprises: one PCI among the at least one PCI is not used for scrambling of one piece of DCI signaling, and the one piece of DCI signaling schedules or triggers the given signal.

As one embodiment, the meaning of "a given signal is not associated with the at least one PCI" comprises: the scrambling sequence generator for generation of the given signal is not initialized by one PCI among the at least one PCI.

As one embodiment, the meaning of "a given signal is not associated with the at least one PCI" comprises: the given signal is not associated with one cell identified or indicated by one PCI among the at least one PCI.

As one embodiment, the meaning of "a given signal is not associated with a given cell" comprises: the given signal is not transmitted on the given cell.

As one embodiment, the meaning of "a given signal is not associated with a given cell" comprises: the given signal is not sent by the given cell.

As one embodiment, the meaning of "a given signal is not associated with a given cell" comprises: a time-frequency domain resource for transmitting the given signal is not on the given cell.

As one embodiment, the meaning of "a given signal is not associated with a given cell" comprises: a time-frequency domain resource for transmitting the given signal is not configured to the given cell.

As one embodiment, the meaning of "a given signal is not associated with a given cell" comprises: one RS resource for a transmission of the given signal is not transmitted on a resource in the given cell.

As one embodiment, the meaning of "a given signal is not associated with a given cell" comprises: one RS resource for a transmission of the given signal does not belong to the given cell.

As one embodiment, the meaning of "a given signal is not associated with a given cell" comprises: one RS resource for a transmission of the given signal is not configured to the given cell.

As one embodiment, the meaning of "a given signal is not associated with a given cell" comprises: one antenna port for a transmission of the given signal is not configured to the given cell.

As one embodiment, the meaning of "a given signal is not associated with a given cell" comprises: one spatial filter for a transmission of the given signal is not configured to the given cell.

As one embodiment, the given signal is one or more transmissions of the first SRS resource in the reference time-domain resource set.

As one embodiment, the given signal is a signal on some of antenna ports in one or more transmissions of the first SRS resource in the reference time-domain resource set.

### Embodiment 8

Embodiment 8 illustrates a schematic diagram of at least one transmission according to one embodiment of the present application, as shown in FIG. 8.

In Embodiment 8, the at least one transmission comprises a plurality of transmissions of a first SRS resource before first signaling.

As one embodiment, the at least one transmission comprises a plurality of transmissions of the first SRS resource before the first signaling, and precoding information of the first SRS resource in the plurality of transmissions is the same.

As one embodiment, the meaning of "precoding information of the first SRS resource in the plurality of transmissions is the same" comprises: precoding information of the first SRS resource in the plurality of transmissions is assumed to be the same.

As one embodiment, the meaning of "precoding information of the first SRS resource in the plurality of transmissions is the same" comprises: precoding information of the first SRS resource in the plurality of transmissions is expected to be the same.

As one embodiment, the meaning of "precoding information of the first SRS resource in the plurality of transmissions is the same" comprises: precoding information of the first SRS resource in the plurality of transmissions is not expected to be different.

As one embodiment, the at least one transmission comprises a plurality of transmissions of the first SRS resource before the first signaling, and whether precoding information of the first SRS resource in the plurality of transmissions is the same is related to implementation of a first node.

As one embodiment, the at least one transmission comprises a plurality of transmissions of the first SRS resource before the first signaling, and the first node determines by itself whether precoding information of the first SRS resource in the plurality of transmissions is the same.

As one embodiment, the at least one transmission comprises a plurality of most recent transmissions of the first SRS resource before the first signaling.

As one embodiment, a most recent one transmission of the first SRS resource before the first signaling overlaps with a reference time-domain resource set in a time domain, and the at least one transmission comprises a plurality of most recent transmissions of the first SRS resource before the first signaling.

As one embodiment, a most recent one transmission of the first SRS resource before the first signaling overlaps with the reference time-domain resource set in the time domain, some of frequency-domain resources configured for the first SRS resource do not belong to a reference frequency-domain resource set, and the at least one transmission comprises a plurality of most recent transmissions of the first SRS resource before the first signaling.

As one embodiment, when a most recent one transmission of the first SRS resource before the first signaling is orthogonal to the reference time-domain resource set in the time domain, the at least one transmission comprises a most recent one transmission of the first SRS resource before the first signaling.

As one embodiment, when a most recent one transmission of the first SRS resource before the first signaling is orthogonal to the reference time-domain resource set in the time domain, the at least one transmission comprises a most recent one transmission of the first SRS resource before the first signaling; and when the most recent one transmission of the first SRS resource before the first signaling overlaps with the reference time-domain resource set in the time domain, the at least one transmission comprises a plurality of transmissions of the first SRS resource before the first signaling.

As one embodiment, when a most recent one transmission of the first SRS resource before the first signaling overlaps with the reference time-domain resource set in the time domain, the at least one transmission comprises a plurality of most recent transmissions of the first SRS resource before the first signaling.

As one embodiment, when a most recent one transmission of the first SRS resource before the first signaling overlaps with the reference time-domain resource set in the time domain, and some of frequency-domain resources configured for the first SRS resource do not belong to the reference frequency-domain resource set, the at least one transmission comprises a plurality of most recent transmissions of the first SRS resource before the first signaling.

### Embodiments 9A-9B

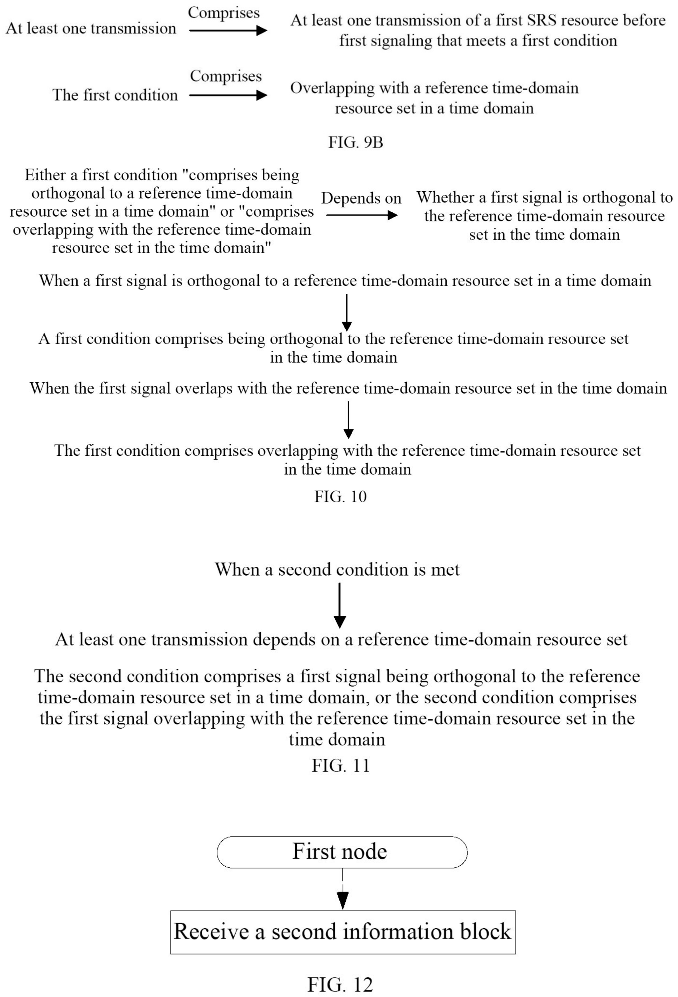

Embodiments 9A-9B respectively illustrate schematic diagrams of at least one transmission according to another embodiment of the present application, as shown in FIGs. 9A-9B.

In Embodiment 9A, the at least one transmission comprises at least one transmission of a first SRS resource before first signaling that meets a first condition; and the first condition comprises being orthogonal to a reference time-domain resource set in a time domain.

In Embodiment 9B, the at least one transmission comprises at least one transmission of the first SRS resource before the first signaling that meets the first condition; and the first condition comprises overlapping with the reference time-domain resource set in the time domain.

As one embodiment, the meaning of "the first condition comprises overlapping with the reference time-domain resource set in the time domain" refers to: the first condition comprises belonging to the reference time-domain resource set in the time domain.

As one embodiment, the meaning of "the first condition comprises overlapping with the reference time-domain resource set in the time domain" refers to: the first condition comprises partially or completely overlapping with the reference time-domain resource set in the time domain.

As one embodiment, the first signaling is used for determining either the first condition "comprises being orthogonal to the reference time-domain resource set in the time domain" or "comprises overlapping with the reference time-domain resource set in the time domain".

As one embodiment, the first signaling indicates either the first condition "comprises being orthogonal to the reference time-domain resource set in the time domain" or "comprises overlapping with the reference time-domain resource set in the time domain".

As one embodiment, the first signaling explicitly indicates either the first condition "comprises being orthogonal to the reference time-domain resource set in the time domain" or "comprises overlapping with the reference time-domain resource set in the time domain".

As one embodiment, the first signaling implicitly indicates either the first condition "comprises being orthogonal to the reference time-domain resource set in the time domain" or "comprises overlapping with the reference time-domain resource set in the time domain".

As one embodiment, a first signal is orthogonal to the reference time-domain resource set in the time domain, and the first condition comprises being orthogonal to the reference time-domain resource set in the time domain.

As one embodiment, the first signal overlaps with the reference time-domain resource set in the time domain, and the first condition comprises being orthogonal to the reference time-domain resource set in the time domain, or the first condition comprises overlapping with the reference time-domain resource set in the time domain.

As one embodiment, the first signal overlaps with the reference time-domain resource set in the time domain, and the at least one transmission comprises a most recent one transmission of the first SRS resource before the first signaling.

As one embodiment, the meaning of "the first signal overlaps with the reference time-domain resource set in the time domain" comprises: the first signal belongs to the reference time-domain resource set in the time domain.

As one embodiment, the meaning of "the first signal overlaps with the reference time-domain resource set in the time domain" comprises: the first signal partially or completely overlaps with the reference time-domain resource set in the time domain.

### Embodiment 10

Embodiment 10 illustrates a schematic diagram of a relationship among a first signal, a reference time-domain resource set, and a first condition according to one embodiment of the present application, as shown in FIG. 10.

In Embodiment 10, either the first condition "comprises being orthogonal to the reference time-domain resource set in a time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

As one embodiment, when the first signal does not belong to the reference time-domain resource set in the time domain, the first condition comprises being orthogonal to the reference time-domain resource set in the time domain.

As one embodiment, when the first signal partially overlaps with the reference time-domain resource set in the time domain, the first condition comprises overlapping with the reference time-domain resource set in the time domain.

As one embodiment, the meaning of "the first signal partially overlaps with the reference time-domain resource set in the time domain" comprises: a time-domain resource occupied by the first signal belongs to the reference time-domain resource set.

As one embodiment, the meaning of "the first signal partially overlaps with the reference time-domain resource set in the time domain" comprises: a time-domain resource comprised in the reference time-domain resource set belongs to a time-domain resource occupied by the first signal.

### Embodiment 11

Embodiment 11 illustrates a schematic diagram of a relationship among at least one transmission, a reference time-domain resource set and a second condition according to one embodiment of the present application; as shown in FIG. 11.

In Embodiment 11, when the second condition is met, the at least one transmission depends on the reference time-domain resource set; and the second condition comprises a first signal being orthogonal to the reference time-domain resource set in a time domain, or the second condition comprises the first signal overlapping with the reference time-domain resource set in the time domain.

As one embodiment, only when the second condition is met, the at least one transmission depends on the reference time-domain resource set.

As one embodiment, when the second condition is not met, the at least one transmission does not depend on the reference time-domain resource set.

As one embodiment, when the second condition is not met, the at least one transmission is a most recent one transmission of a first SRS resource before first signaling.

As one embodiment, when any condition among a plurality of conditions is met, the at least one transmission depends on the reference time-domain resource set, and the second condition is one of the plurality of conditions.

As one embodiment, the second condition comprises the first signal being orthogonal to the reference time-domain resource set in the time domain.

As one embodiment, the second condition comprises the first signal overlapping with the reference time-domain resource set in the time domain.

### Embodiment 12

Embodiment 12 illustrates a schematic diagram of a second information block and a reference frequency-domain resource set according to one embodiment of the present application, as shown in FIG. 12.

In Embodiment 12, a first receiver receives the second information block, wherein the second information block is used for determining the reference frequency-domain resource set; and a UL transmission in one or more symbols configured by higher-layer parameters as DL in a reference time-domain resource set belongs to the reference frequency-domain resource set in a frequency domain.

As one embodiment, the second information block is borne by higher layer signaling.

As one embodiment, the second information block is borne by RRC signaling.

As one embodiment, the second information block comprises some or all of fields in one or more RRC IEs.

As one embodiment, the second information block comprises some of fields in one or more RRC IEs.

As one embodiment, the second information block comprises some of fields in a plurality of RRC IEs.

As one embodiment, the second information block comprises all or some of fields in one RRC IE (Information Element).

As one embodiment, the second information block comprises some of fields in one RRC IE (Information Element).

As one embodiment, the second information block is borne by MAC CE signaling.

As one embodiment, the second information block is borne by physical layer signaling.

As one embodiment, the second information block is borne by DCI signaling.

As one embodiment, the reference frequency-domain resource set comprises at least one RB.

As one embodiment, the reference frequency-domain resource set comprises one RB.

As one embodiment, the reference frequency-domain resource set comprises a plurality of RBs.

As one embodiment, the reference frequency-domain resource set comprises one RB or a plurality of consecutive RBs.

As one embodiment, the second information block indicates the reference frequency-domain resource set.

As one embodiment, the second information block explicitly indicates the reference frequency-domain resource set.

As one embodiment, the second information block implicitly indicates the reference frequency-domain resource set.

As one embodiment, the second information block indicates a reference frequency-domain resource pool, and the reference frequency-domain resource set belongs to the reference frequency-domain resource pool.

As one embodiment, the reference frequency-domain resource pool comprises at least one RB.

As one embodiment, the reference frequency-domain resource pool comprises one RB.

As one embodiment, the reference frequency-domain resource pool comprises a plurality of RBs.

As one embodiment, the reference frequency-domain resource pool comprises one RB or a plurality of consecutive RBs.

As one embodiment, the reference frequency-domain resource pool comprises the reference frequency-domain resource set.

As one embodiment, the second information block indicates the reference frequency-domain resource pool, and the reference frequency-domain resource set comprises at least one RB in the reference frequency-domain resource pool that overlaps with one DL BWP.

As one embodiment, the second information block indicates the reference frequency-domain resource pool, and the reference frequency-domain resource set comprises all RBs in the reference frequency-domain resource pool that overlap with one DL BWP.

As one embodiment, the second information block indicates the reference frequency-domain resource pool, and the reference frequency-domain resource set comprises at least one RB in the reference frequency-domain resource pool that overlaps with a BWP where a first SRS resource is located.

As one embodiment, the second information block indicates the reference frequency-domain resource pool, and the reference frequency-domain resource set comprises all RBs in the reference frequency-domain resource pool that overlap with a BWP where the first SRS resource is located.

As one embodiment, the second information block indicates the reference frequency-domain resource pool, the reference frequency-domain resource set comprises at least one RB in the reference frequency-domain resource pool that overlaps with a BWP where the first SRS resource is located, and there exists at least one RB in the reference frequency-domain resource pool that overlaps with a first BWP.

As one embodiment, the second information block indicates the reference frequency-domain resource pool, the reference frequency-domain resource set comprises at least one RB in the reference frequency-domain resource pool that overlaps with a BWP where the first SRS resource is located, and there exists at least one RB in the reference frequency-domain resource pool that overlaps with the first BWP.

As one embodiment, the first BWP is one BWP other than a BWP where the first SRS resource is located.

As one embodiment, the first BWP is different from a BWP where the first SRS resource is located.

As one embodiment, the first BWP is a DL BWP, and a BWP where the first SRS resource is located is a UL BWP.

As one embodiment, a BWP where the first SRS resource is located and the first BWP belong to a same serving cell.

As one sub-embodiment of the above embodiment, a BWP where the first SRS resource is located and the first BWP belong to a same serving cell, the second information block is IE ServingCellConfig, and the second information block indicates at least one RB where the reference frequency-domain resource pool overlaps with at least one BWP comprised in the same serving cell.

As one sub-embodiment of the above embodiment, a BWP where the first SRS resource is located and the first BWP belong to a same serving cell, the second information block is IE ServingCellConfigCommonSIB, and the second information block indicates at least one RB where the reference frequency-domain resource pool overlaps with at least one BWP comprised in the same serving cell.

As one sub-embodiment of the above embodiment, a BWP where the first SRS resource is located and the first BWP belong to a same serving cell, the second information block is IE ServingCellConfigCommon, and the second information block indicates at least one RB where the reference frequency-domain resource pool overlaps with at least one BWP comprised in the same serving cell.

As one embodiment, the second information block indicates the reference frequency-domain resource pool, the reference frequency-domain resource set comprises all RBs in the reference frequency-domain resource pool, and all RBs comprised in the reference frequency-domain resource pool belong to a same BWP.

As one embodiment, the second information block indicates the reference frequency-domain resource pool, the reference frequency-domain resource set comprises all RBs in the reference frequency-domain resource pool, and all RBs comprised in the reference frequency-domain resource pool belong to a frequency-domain resource occupied by one BWP.

As one embodiment, the second information block indicates the reference frequency-domain resource pool, the reference frequency-domain resource set comprises all RBs in the reference frequency-domain resource pool, and all RBs comprised in the reference frequency-domain resource pool belong to an RB occupied by one BWP.

As one sub-embodiment of the above embodiment, the second information block is IE BWP-Downlink, the IE BWP-Downlink comprises a parameter BWP-Id, and the one BWP is identified by the BWP-Id.

As one sub-embodiment of the above embodiment, the second information block is IE BWP-DownlinkCommon, the IE BWP-DownlinkCommon comprises a parameter BWP-Id, and the one BWP is identified by the BWP-Id.

As one sub-embodiment of the above embodiment, the second information block is IE BWP-DownlinkDedicated, the IE BWP-DownlinkDedicated comprises a parameter BWP-Id, and the one BWP is identified by the BWP-Id.

As one embodiment, the second information block is one RRC IE, and a name of the one RRC IE comprises ServingCellConfig.

As one embodiment, the second information block is one RRC IE, and the name of the one RRC IE comprises ServingCell.

As one embodiment, the second information block is one RRC IE, and the name of the one RRC IE comprises BWP-Downlink.

As one embodiment, the second information block is one RRC IE, and the name of the one RRC IE comprises BWP.

As one embodiment, the reference frequency-domain resource set comprises at least one RB, and the second information block indicates an index of the at least one RB.

As one embodiment, the reference frequency-domain resource set comprises at least one RB, and the second information block indicates an index of a starting RB of the at least one RB and the number of RBs comprised in the at least one RB.

As one embodiment, a second condition comprises some or all of frequency-domain resources configured for the first SRS resource not belonging to the reference frequency-domain resource set.

As one embodiment, the second condition comprises some or all of frequency-domain resources configured for the first SRS resource belonging to the reference frequency-domain resource set.

### Embodiment 13

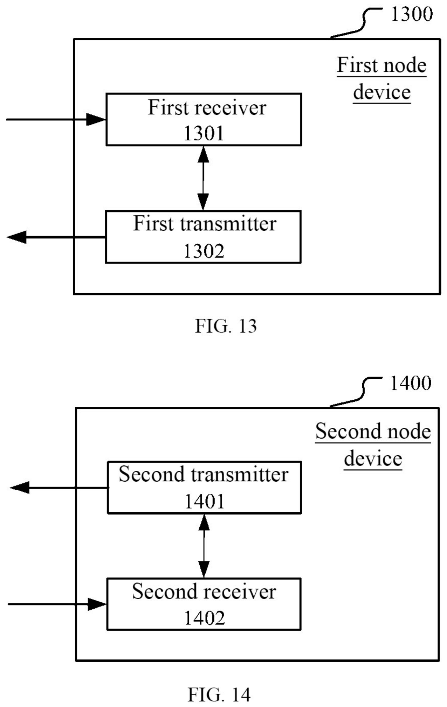

Embodiment 13 illustrates a structural block diagram of a processing apparatus used in a first node device according to one embodiment of the present application, as shown in FIG. 13. In FIG. 13, the processing apparatus 1300 in the first node device comprises a first receiver 1301 and a first transmitter 1302.

As one embodiment, the first node device is user equipment.

As one embodiment, the first node device is a relay node device.

As one embodiment, the first receiver 1301 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1302 comprises at least one of {the antenna 452, a transmitting device 454, a transmitting processor 468, a multi-antenna transmitting processor 457, the controller/processor 459, the memory 460, and the data source 467} in Embodiment 4.

The first receiver 1301 receives a first information block; and receives first signaling.

The first transmitter 1302 sends a first signal.

In Embodiment 13, the first information block is used for determining a reference time-domain resource set; the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, "the at least one transmission depends on the reference time-domain resource set" comprises: precoding information of the first SRS resource in the at least one transmission depends on whether the at least one transmission overlaps with the reference time-domain resource set in a time domain.

As one embodiment, the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission.

As one embodiment, in the reference time-domain resource set, sending of one or more transmissions of the first SRS resource is abandoned.

As one embodiment, in the reference time-domain resource set, sending of signals on some of antenna ports in one or more transmissions of the first SRS resource is abandoned.

As one embodiment, the at least one transmission comprises a plurality of transmissions of the first SRS resource before the first signaling.

As one embodiment, the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

As one embodiment, either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

As one embodiment, when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

As one embodiment, it comprises:
the first receiver 1301 receives a second information block,
wherein the second information block is used for determining a reference frequency-domain resource set; and a UL transmission in one or more symbols configured by higher-layer parameters as DL in the reference time-domain resource set belongs to the reference frequency-domain resource set in a frequency domain.

### Embodiment 14

Embodiment 14 illustrates a structural block diagram of a processing apparatus used in a second node device according to one embodiment of the present application, as shown in FIG. 14. In FIG. 14, the processing apparatus 1400 in the second node device comprises a second transmitter 1401 and a second receiver 1402.

As one embodiment, the second node device is a base station device.

As one embodiment, the second node device is user equipment.

As one embodiment, the second node device is a relay node device.

As one embodiment, the second transmitter 1401 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1402 comprises at least one of {the antenna 420, a receiving device 418, a receiving processor 470, a multi-antenna receiving processor 472, the controller/processor 475, and the memory 476} in Embodiment 4.

The second transmitter 1401 sends a first information block; and sends first signaling.

The second receiver 1402 receives a first signal.

In Embodiment 14, the first information block is used for determining a reference time-domain resource set; the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

As one embodiment, "the at least one transmission depends on the reference time-domain resource set" comprises: precoding information of the first SRS resource in the at least one transmission depends on whether the at least one transmission overlaps with the reference time-domain resource set in a time domain.

As one embodiment, the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission.

As one embodiment, in the reference time-domain resource set, sending of one or more transmissions of the first SRS resource is abandoned.

As one embodiment, in the reference time-domain resource set, sending of signals on some of antenna ports in one or more transmissions of the first SRS resource is abandoned.

As one embodiment, the at least one transmission comprises a plurality of transmissions of the first SRS resource before the first signaling.

As one embodiment, the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

As one embodiment, either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

As one embodiment, when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

As one embodiment, it comprises:
the second transmitter 1401 sending a second information block,
wherein the second information block is used for determining a reference frequency-domain resource set; and a UL transmission in one or more symbols configured by higher-layer parameters as DL in the reference time-domain resource set belongs to the reference frequency-domain resource set in a frequency domain.

Those of ordinary skill in the art may understand that all or some of the steps in the above method may be completed by instructing relevant hardware through a program, and the program may be stored in a computer-readable storage medium, such as a read-only memory, a hard disk or an optical disk. Optionally, all or some of the steps of the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals, and UE of the present application include, but are not limited to, drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or system devices in the present application include, but are not limited to, macro cellular base stations, micro cellular base stations, Femtocells, relay base stations, gNBs (NR Nodes B), TRPs (Transmitter Receiver Points) and other wireless communication devices.

The above are only preferred embodiments of the present application and are not used for limiting the scope of protection of the present application. Any change and modification made based on the embodiments described in the specification, if similar some or all of technical effects can be obtained, should be deemed obvious and fall within the scope of protection of the present application.

## Claims

1. A first node for wireless communication, comprising:
a first receiver receiving a first information block, wherein the first information block is used for determining a reference time-domain resource set; and receiving first signaling; and
a first transmitter sending a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

2. The first node according to claim 1, wherein "the at least one transmission depends on the reference time-domain resource set" comprises: precoding information of the first SRS resource in the at least one transmission depends on whether the at least one transmission overlaps with the reference time-domain resource set in a time domain.

3. The first node according to claim 1 or 2, wherein the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission;
or in the reference time-domain resource set, sending of one or more transmission occasions of the first SRS resource is abandoned;
or in the reference time-domain resource set, sending of signals on some of antenna ports in one or more transmission occasions of the first SRS resource is abandoned.

4. The first node according to any one of claims 1 to 3, wherein the at least one transmission comprises a plurality of transmissions of the first SRS resource before the first signaling.

5. The first node according to any one of claims 1 to 4, wherein the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

6. The first node according to claim 5, wherein either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

7. The first node according to any one of claims 1 to 6, wherein when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

8. The first node according to any one of claims 1 to 7, comprising: the first receiver receiving a second information block, wherein the second information block is used for determining a reference frequency-domain resource set; and a UL transmission in the one or more symbols configured by the higher-layer parameters as DL in the reference time-domain resource set belongs to the reference frequency-domain resource set in a frequency domain.

9. A second node for wireless communication, comprising:
a second transmitter sending a first information block, wherein the first information block is used for determining a reference time-domain resource set; and sending first signaling; and
a second receiver receiving a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

10. The second node according to claim 9, wherein the at least one transmission depending on the reference time-domain resource set comprises: precoding information of the first SRS resource in the at least one transmission depends on whether the at least one transmission overlaps with the reference time-domain resource set in a time domain.

11. The second node according to claim 9 or 10, wherein the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission;
or in the reference time-domain resource set, sending of one or more transmissions of the first SRS resource is abandoned;
or in the reference time-domain resource set, sending of signals on some of antenna ports in one or more transmissions of the first SRS resource is abandoned.

12. The second node according to any one of claims 9 to 11, wherein the at least one transmission comprises a plurality of transmissions of the first SRS resource before the first signaling.

13. The second node according to any one of claims 9 to 12, wherein the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

14. The second node according to claim 13, wherein either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

15. The second node according to any one of claims 9 to 14, wherein when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

16. The second node according to any one of claims 9 to 15, comprising: the second transmitter sending a second information block, wherein the second information block is used for determining a reference frequency-domain resource set; and a UL transmission in the one or more symbols configured by the higher-layer parameters as DL in the reference time-domain resource set belongs to the reference frequency-domain resource set in a frequency domain.

17. A method used in a first node for wireless communication, comprising:
receiving a first information block, wherein the first information block is used for determining a reference time-domain resource set; receiving first signaling; and
sending a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

18. The method according to claim 17, wherein "the at least one transmission depends on the reference time-domain resource set" comprises: precoding information of the first SRS resource in the at least one transmission depends on whether the at least one transmission overlaps with the reference time-domain resource set in a time domain.

19. The method according to claim 17 or 18, wherein the reference time-domain resource set comprises one or more symbols, at least one symbol in the reference time-domain resource set is configured by higher-layer parameters as DL, and one or more subcarriers in the one or more symbols in the reference time-domain resource set that are configured by the higher-layer parameters as DL are used for an uplink transmission;
or in the reference time-domain resource set, sending of one or more transmissions of the first SRS resource is abandoned;
or in the reference time-domain resource set, sending of signals on some of antenna ports in one or more transmissions of the first SRS resource is abandoned.

20. The method according to any one of claims 17 to 19, wherein the at least one transmission comprises a plurality of transmissions of the first SRS resource before the first signaling.

21. The method according to any one of claims 17 to 20, wherein the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

22. The method according to claim 21, wherein either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

23. The method according to any one of claims 17 to 22, wherein when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

24. The method according to any one of claims 17 to 23, comprising: receiving a second information block, wherein the second information block is used for determining a reference frequency-domain resource set; and a UL transmission in the one or more symbols configured by the higher-layer parameters as DL in the reference time-domain resource set belongs to the reference frequency-domain resource set in a frequency domain.

25. A method used in a second node for wireless communication, comprising:
sending a first information block, wherein the first information block is used for determining a reference time-domain resource set; sending first signaling; and
receiving a first signal,
wherein the first signaling comprises a first domain, the first domain in the first signaling indicates a first SRI, and the first domain comprises at least one bit; the first SRI indicates a first SRS resource, and some or all of antenna ports for sending the first signal are the same as antenna ports for the first SRS resource; and the first SRI is associated with at least one transmission of the first SRS resource before the first signaling, and the at least one transmission depends on the reference time-domain resource set.

26. The method according to claim 25, wherein "the at least one transmission depends on the reference time-domain resource set" comprises: precoding information of the first SRS resource in the at least one transmission depends on whether the at least one transmission overlaps with the reference time-domain resource set in a time domain.

27. The method according to claim 25 or 26, wherein the reference time-domain resource set comprises one or more symbols, at least one symbol in the reference time-domain resource set is configured by higher-layer parameters as DL, and one or more subcarriers in the one or more symbols in the reference time-domain resource set that are configured as DL by the higher-layer parameters are used for an uplink transmission;
or in the reference time-domain resource set, sending of one or more transmissions of the first SRS resource is abandoned;
or in the reference time-domain resource set, sending of signals on some of antenna ports in one or more transmissions of the first SRS resource is abandoned.

28. The method according to any one of claims 25 to 27, wherein the at least one transmission comprises a plurality of transmissions of the first SRS resource before the first signaling.

29. The method according to any one of claims 25 to 28, wherein the at least one transmission comprises at least one transmission of the first SRS resource before the first signaling that meets a first condition; and the first condition comprises being orthogonal to the reference time-domain resource set in the time domain, or the first condition comprises overlapping with the reference time-domain resource set in the time domain.

30. The method according to claim 29, wherein either the first condition "comprises being orthogonal to the reference time-domain resource set in the time domain" or "comprises overlapping with the reference time-domain resource set in the time domain" depends on whether the first signal is orthogonal to the reference time-domain resource set in the time domain; when the first signal is orthogonal to the reference time-domain resource set in the time domain, the first condition comprises being orthogonal to the reference time-domain resource set in the time domain; and when the first signal overlaps with the reference time-domain resource set in the time domain, the first condition comprises overlapping with the reference time-domain resource set in the time domain.

31. The method according to any one of claims 25 to 30, wherein when a second condition is met, the at least one transmission depends on the reference time-domain resource set; and the second condition comprises the first signal being orthogonal to the reference time-domain resource set in the time domain, or the second condition comprises the first signal overlapping with the reference time-domain resource set in the time domain.

32. The method according to any one of claims 25 to 31, comprising: sending a second information block, wherein the second information block is used for determining a reference frequency-domain resource set; and a UL transmission in the one or more symbols configured by the higher-layer parameters as DL in the reference time-domain resource set belongs to the reference frequency-domain resource set in a frequency domain.
